# EUROPEAN PATENT APPLICATION

(11) **EP 2 000 983 A1**
(43) Date of publication of application: **10.12.2008**
(21) Application number: 08009421.2
(22) Date of filing: 21.05.2008
(51) Int. Cl.: G07B 17/00

(54) **Intelligent document composition for mail processing**

(30) Priority: 22.05.2007 US 802301
(71) Applicant: Bowe Bell + Howell Company, Wheeling IL 60090-6232 (US)
(72) Inventor: Isles, Marvin L., Chicago, Illinois 60611 (US); Tolomei, Victor, Raleigh, North Carolina, 27606 (US); Mackelprang, Mark G., Cary, North Carolina, 27511 (US); Phifer, Leonado Rasheed, Chicago Heights, Illinois, 60411 (US); Conard, Walter S., Lake Villa, Illinois 60046 (US)
(74) Representative: Stöckeler, Ferdinand

(57) **Abstract**

A data engine collects real-time information associated with the operations of hard copy mail processors. In the example, the data engine also aggregates data relating to one or more phases of electronic document generation, e.g. document composition and/or printstream processing (re-composition). Analysis of the data enables conditions, states or events of one or more of the phases of the mail processing lifecycle to influence the operations and execution of one or more phases in real-time. For example, the data engine can apply processing rules to recommend or dynamically execute action in the document composition or printstream phases, to improve operations in the mail processing facility. Furthermore, the data engine may also provide suggestions for standardizing various steps of mail processing or upgrading of equipment of the mail processing facility, so as to increase overall mail processing effectiveness.

## Description

### Technical Field

The present subject matter relates to methods and systems for influencing document processing dynamically, based upon analysis of real-time data pertaining to document processing operations.

### Background

Generally, document processing and preparation occurs autonomously in stages, where each stage may itself involve execution of various tasks and procedures to render a finished and delivered document. In a first phase of processing referred to as the document composition phase, documents are created, arranged and manipulated in softcopy/electronic form using one or more document composition software tools. This phase may also correspond to periods wherein a data center processor, list processor, or other such tool is utilized to compose documents destined for operation by a mail processing device, such as an inserter. Data center processors are typically used to merge documents generated using one or more document composition tools selectively with postal authority certified mailing lists to enable efficient distribution of the documents through a postal network. One or more device control setting files, such as an inserter data file (IDF), for providing instructions on how to prepare documents in hardcopy form, may be associated with the documents composed by the data center processor. Ultimately, the composition phase corresponds to instances wherein the orientation, style, placement, appearance and other such features that influence the hardcopy representation of the document may be controlled.

The second phase of processing, referred to as the printstream processing phase, corresponds to instances wherein a softcopy/electronic representation of a document is translated into a specific printstream format, such that the resultant output is at least a print file representative of the document as structured in accordance with the printstream format. This phase also corresponds to instances wherein existing print files-i.e., one or more print files from various sources-are manipulated or restructured to generate a new print file, and hence alter the expected document output from the printing device. Generally, a print file is intended to maintain the same document orientation, style, placement, appearance and other such features established during the document composition phase, while enabling the appropriate instructions for regulating and controlling the behavior of the printer device--i.e., ink head spray pattern upon a print medium such as paper. Hence, the print file, composed in its corresponding printstream data format, acts as a medium for converting a softcopy/electronic representation of a document to its hardcopy/physical equivalent. In certain instances, the document composition and printstream processing phases may occur simultaneously depending on the type of tool being used, though they both result in the generation of data of differing formats (e.g., Rich Text Format versus ASCII format).

The third document processing phase is referred to as the mail processing phase, which corresponds to instances of hardcopy/physical production of a document. In general, this phase entails the execution of procedures for preparing documents in order to generate mail articles-i.e., the printing of one or more documents intended to be directed through a postal network to an intended recipient. Furthermore, the mail processing phase relates to activities and operations performed in developing the mail articles into mail items, wherein the items are appropriately processed (e.g., folded, postage affixed) for handoff to a postal or delivery service. Hence, a document created during the document composition or printstream processing phase is generally produced at high speeds during the mail processing phase.

Various types of processing may be performed upon a document during the mail processing phase, such as the printing of documents in order to ready them for insertion, merging of one or more documents to generate a complete mail article (e.g., a five page document), insertion of the entire mail article into an envelope to compose a completed mail piece or item, distribution and/or sorting of mail pieces into one or more mail bins for delivery by a postal authority, stamping of special instructions onto a document or mail piece, labeling of a document or mail piece, the addition of written or printed marks, and other mail preparation and/or sortation tasks. In addition, various software, hardware, and firmware devices or tools may be utilized -i.e., such as by one or more mail processing facilities-for regulating document preparation and production, including inserters, sorters, computing devices, server devices and production management software.

Taken in its entirety, the above described document processing phases correspond to the mail processing lifecycle, which encompasses all activities of mail processing from initial document creation and list generation, through printstream processing, to mail article preparation & readiness. However, because each of these phases and activities of document processing often occurs independently, there is limited opportunity to standardize processes across the mail composition lifecycle. For example, in today's mail processing lifecycle, an individual composing a document with a document composition or printstream processing tool that is destined for processing in a mail processing facility is not able in advance (real-time) to account for factors or occurrences within the mail processing facility that impacts its ability to render the document (e.g., machine downtime, inventory restrictions). Similarly, a device operating in the mail processing facility today is not able to compensate for or adjust in advance (real-time) to information regarding the printstream data. The type of intelligence and real-time proliferation of data throughout the mail processing lifecycle required to make such scenarios feasible simply doesn't exist today.

Therefore, a need exists for technology (e.g. method or equipment) for enabling one or more of the phases of the mail processing lifecycle to influence the operations and execution of another phase, in real-time.

### Summary

The technologies described herein improve over the existing art discussed above, for example, by enabling one or more of the phases of the mail processing lifecycle to influence the operations and execution of another respective phase in real-time.

For example, a method of processing mail articles disclosed herein may involve aggregating data in real-time from a processor, regarding processing of electronic files representing documents for processing as mail articles; and aggregating data in real-time from a plurality of mail processors that are configured for processing hard copies of the documents, as mail articles. The aggregated data is analyzed to identify an action, which would improve document processing by one or more of the mail processors. The method involves generating an output to promote implementation of the identified action.

The analysis, for example, might identify an upgrade of the mail processing facility. In such a case, the output would provide a recommendation of the identified upgrade to an administrator of the mail processing facility, e.g. to add or reconfigure hardware, to add other resources, to upgrade software, or the like. In another example, the analysis might identify an action related to a modification of composition of the electronic files or of a printstream containing the electronic files. In such cases, the output might recommend the electronic processing modification or might automatically implement the electronic processing modification. The data processing may also recognize and recommend improvements based on standardization of job parameters.

The examples also include a disclosure of a related system implementation. Such a system might include an electronic document processor, for producing one or more electronic files containing electronic representations of documents for processing as mail articles. The system also includes mail processors, for processing printed hard copies of the documents, as mail articles. A data engine communicates with the electronic document processor and one or more of the mail processors. The data engine aggregates data in real-time regarding operations of the processors, and it analyzes the aggregated data to identify an action to improve document processing by the mail processors.

Another method of processing mail articles disclosed herein may involve automatically aggregating data in real-time from mail processors configured for processing hard copies of documents as mail articles. The aggregated data is automatically analyzed so as to identify an action related to electronic processing of an electronic file for one or more further documents before document printing, to improve further document processing by one or more of the mail processors. The data analysis generates an output to promote implementation of the identified action during the electronic processing.

The examples also include a disclosure of a related system implementation. Such a system might include mail processors configured for processing hard copies of documents as mail articles and a data engine in communication with one or more of the mail processors. The data engine in this example aggregates data in real-time regarding operations of the mail processors. The data engine analyzes the aggregated data, so as to identify an action related to electronic processing of an electronic file for one or more further documents before document printing, to improve further document processing by one or more of the mail processors. The data engine also generates an output to promote implementation of the identified action in an electronic document processor configured for performing electronic processing with regard to electronic files representing further documents.

An example of the methods/systems, for use in processing through document creation, printstream processing and mail article preparation phases, enables consistent aggregation and communication of information from all three processing phases. Processing rules enable dynamic adaptation. Furthermore, the example provides a means of standardizing the various processes executed during the mail processing, based on real-time information from each phase of the mail processing lifecycle, so as to increase overall mail processing effectiveness.

The detailed description and drawings also disclose a number of other methodologies.

One such method is for influencing operations of hard copy mail processing equipment by identifying a printstream modification. This method involves collecting real-time information associated with the operations of the mail processing equipment. Printstream information regarding a printstream useable for generation of printed mail articles for processing by the mail processing equipment is received. The method also entails analyzing the collected information associated with the operations of the mail processing equipment and the received printstream information, so as to analyze operations of the mail processing equipment relative to hard copy documents generated from the printstream. The analysis identifies a printstream modification, to improve performance of the mail processing equipment.

Another exemplary method influences operations of hard copy mail processing equipment by identifying a modification in document composition. This method involves collecting real-time information associated with the operations of the mail processing equipment and collecting information with respect to electronic composition of a plurality of documents intended for printing and processing as mail articles by the mail processing equipment. Here, the collected information associated with the operations of the mail processing equipment and the collected electronic composition information are processed to analyze operations of the mail processing equipment. The analysis identifies a modification of electronic composition of the documents, to improve performance of the mail processing equipment.

Another exemplary method disclosed herein enables optimizing of operations of hard copy mail processing equipment. This method involves collecting information associated with the mail processing operations equipment during processing of a number of jobs, and obtaining information regarding a printstream useable for generation of printed mail articles for processing by the mail processing equipment, for the jobs. The collected mail processing operations information for the jobs and the printstream information are analyzed, to identify an opportunity for standardization of one or more operations of the processing equipment. Based on the analysis, the methodology serves to specify one or more parameters for future jobs, to take advantage of the identified standardization opportunity.

Another method, for enhancing operations of hard copy mail processing equipment, involves collecting information associated with mail processing operations of the equipment and analyzing information regarding a printstream useable for generating hard copy documents for the mail processing. The analysis determines whether an impact of processing of the hard copy documents on the mail processing operations would be favorable or unfavorable. Upon determining that the impact would be unfavorable, the printstream may be altered to achieve a favorable impact on the operations of the mail processing equipment in processing hard copy documents generated from the altered printstream.

Additional advantages and novel features will be set forth in part in the description which follows, and in part will become apparent to those skilled in the art upon examination of the following and the accompanying drawings or may be learned by production or operation of the examples. The advantages of the present teachings may be realized and attained by practice or use of various aspects of the methodologies, instrumentalities and combinations set forth in the detailed examples discussed below.

### Brief Description of the Drawings

The drawing figures depict one or more implementations in accord with the present teachings, by way of example only, not by way of limitation. In the figures, like reference numerals refer to the same or similar elements.

FIG. 1 is an exemplary high-level depiction of a multi-phase mail processing system, with a data engine for collecting real-time data throughout the operation of the mail processing lifecycle and for analyzing the data to identify actions for possible processing improvements.

FIG. 2 is an exemplary depiction of modular software functional design included within the data engine for collecting and processing information pertaining to the various phases of the mail processing lifecycle.

FIG. 3 is an exemplary depiction of a process for enabling adaptation of one or more processing phases or activities of the mail processing lifecycle in response to real-time information relative to one or more of the respective processing phases.

FIG. 4 depicts an exemplary scenario for which the process for enabling adaptation of the one or more processing phases or activities of the mail processing lifecycle may be applied.

FIGS 5a and 5b depict exemplary processing steps performed to enable a particular recommended action to be executed.

FIG. 6 is an example of how standardization is achieved using automated processes and operator managed decisions.

FIGS. 7a and 7b depict exemplary envelopes having differing characteristics from which to standardize one or more processing phases or activities of the mail processing lifecycle in order to improve overall mail processing effectiveness.

FIG. 8 is an exemplary process flow diagram for correction of a job processing issue resulting from equipment not being available for operation.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

The examples presented herein pertain to methods and systems for influencing one or more processing phases or activities of a multi-phase mail processing lifecycle in response to real-time information relative to one or more of the respective processing phases. Still further, the examples present methods and systems for standardizing the various activities, tools or processes that occur throughout the mail processing lifecycle in order to improve overall mail processing effectiveness. By enabling a means of standardization, the myriad of tools, resources, people, materials, processes, operations or activities that occur during execution of the mail processing lifecycle may be more effectively managed, adapted and directed. Also, the standardization process may enable the mail processing lifecycle to be optimized based upon present moment and/or historical data, constraints and/or opportunities.

As presented herein, the "mail processing lifecycle" pertains to all activities, operations, tasks, processes, instructions, and considerations that influence and facilitate the production and processing of mail articles into finished mail pieces or items for delivery. This may include, but is not limited to: address list generation, updating and cleansing; document composition; printstream processing and management; printer control; inserter processing; sorter processing and scheme generation; vision system processing; job tracking; item tracking; error verification; production data recordation; postage payment processing; machine maintenance and performance; user/operator resource allocation; mail distribution tracking; material and resource allocation; etc. Of course, various human, machine and material resources and considerations also influence the effectiveness of the mail processing lifecycle.

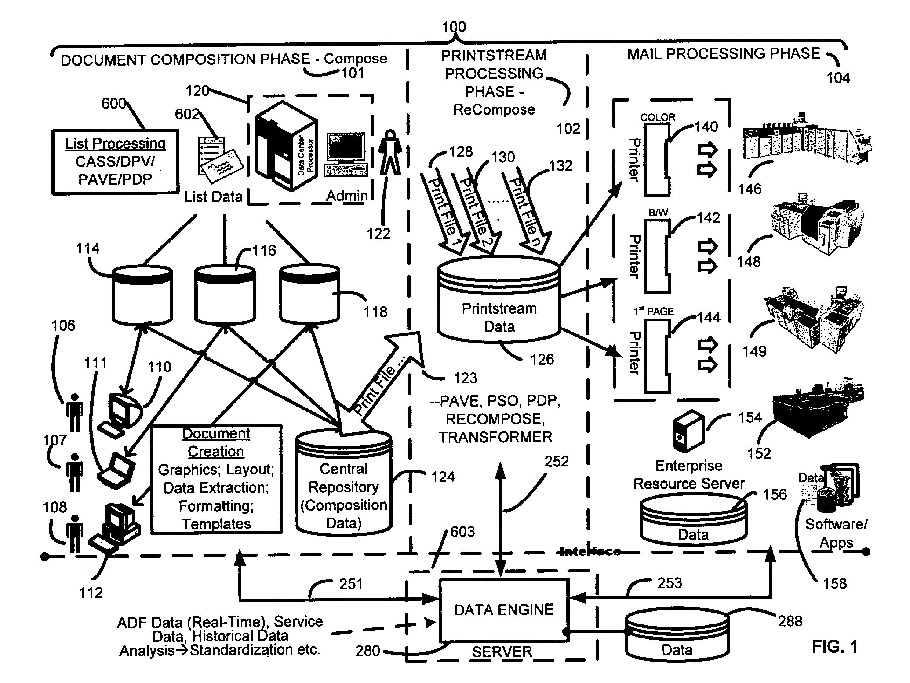

Reference now is made in detail to the examples illustrated in the accompanying drawings and discussed below. FIG. 1 depicts an example of a mail processing system 100 with a data engine for collecting real-time information pertaining to each of the three processing phases and for influencing the operation of the mail processing lifecycle. Three differing phases of document processing characterize the exemplary mail processing lifecycle, including the document composition phase 101, the printstream processing phase 102 and the mail processing phase 104, as described previously. An overall mailing system, such as the system 100 shown in FIG. 1, includes one or more processors for implementing the operations of each respective phase. Hence, the illustrated system includes a document composition processor, a printstream processor and processors in a mail processing facility.

One or more electronic document processors perform processing in relation to electronic files representing or containing representations of electronic documents. A document composition processor, for example, is a data processor, such as one or more personal computers, data terminals, host computers, servers, or the like, for composing electronic files representing documents for processing as mail articles and/or formation of mail pieces. A printstream processor is a computer or other data processor, which is configured to produce an electronic printstream based on electronic document files for driving printing of the documents, or which is configured to modify such a printstream. In most cases, particularly where separate processors are used for composition and printstream processing, the printstream processor receives a printstream from the electronic composition phase and modifies that printstream to produce a new printstream for actual use in printing of hard copies of the documents.

During the document composition phase 101, documents are created, arranged and manipulated in softcopy/electronic form by one or more users 106, 107 and 108 using one or more document composition software tools. The one or more users operate the document composition software tools via one or more computing devices 110, 111, and 112 respectively. Document composition (and in some instances, printstream processing) refers to instances wherein a document is generated, designed and/or altered via electronic data processing means (e.g., via a document composition software tool), such that the resultant output is at least an electronic (softcopy) representation of the document as structured in accordance with a specific file format (e.g., *.doc, *.txt, *.html, *.dat). During an instance of document composition, various types of objects and/or characters may be associated with the document via the document composition tool to comprise the human or machine readable content or message of the document.

Examples of document composition tools which may be employed by the one or more users 106, 107 and 108 during the document composition phase 101 include, but are not limited to, word processing software such as Microsoft Word and Word Perfect, desktop and web publishing software such as Framemaker, Dreamweaver and WebPlus, and image creation software tools such as CorelDRAW or Photoshop. In general, software applications such as these provide a WYSIWYG (What You See Is What You Get) interface for enabling advanced content authoring capability to the user without exposing via the user interface the underlying schema elements and semantic variables that comprise the document (e.g., metadata, data tags, delimiter values). So, for example, in Microsoft Word, when a user types the word "Legacy" in bold, the interface doesn't display any data tags indicative of the style, character, format, type or definition of this user entry (e.g., <bold>Legacy</bold>), but rather only shows Legacy. Many proprietary composition tools also are available and used by those skilled in the art to compose a document.

Other document authoring, generation or composition tools include those that are text based (e.g., Text Editor, Notepad) and WYSIWYM (What You See Is What You Mean) based (e.g., Butterfly XML), wherein the various schema elements and/or semantic variables that enable the structure of the document and its content are presented to the user interface directly. As a practical matter, other document creation tools include any software or operating systems capable of rendering characters and/or objects to a user display, or wherein the characters and/or objects are capable of being rendered to print. For example, when a user creates a representation of the current state of their desktop via the Print Screen function of their keyboard, the captured image data is stored to an electronic buffer space (e.g., the clipboard, a file) and represents an instance of document composition and/or printstream processing.

Generally, the one or more users 106, 107 and 108 may be associated with a common organization, although it is not uncommon for separate document composition authors or sources to be compiled for the generation of a single document. In the case where the one or more users 106, 107 and 108 have a common affiliation, such as in a captive shop where all mail processing activities are conducted in-house, the one or more personal computers (PCs) 110, 111, and 112 or other end user data devices may exchange information with one another via a common network. For example, each of the users may belong to different departments within a large insurance company, where each is responsible for generating different types of documents or content for compilation into an insurance policy document intended for a specific recipient (e.g., a policy owner). The first user 106 may be responsible for compiling cash value accumulation data relative to the insurance policy, the second user 108 may be responsible for compiling the policy detail and insurance provision information, and the third user may be responsible for compiling variable account market value data (e.g., assuming a variable universal life policy). Each user may access one or more policy owner management databases 114, 116, 118-e.g., customer relationship management (CRM) database, or enterprise resource management (ERM) database-for accessing and customizing their respective data (e.g., charts, tables, graphs) relative to the intended document recipient. The management databases 114, 116, and 118 may also provide up-to-date mailing address data (e.g., as provided by a list processor 600) relative to the policy owner. As is well known to those skilled in the art, the mailing address data 602 may be processed in accordance with various address quality regulations, including but not limited to Coding Accuracy Support System (CASS), National Change of Address (NCOA), Delivery Point Validation (DPV) 600, and other postal authority conventions.

A data center processor 120 may be utilized for compiling the data, generated by the one or more users 106, 107, and 108 via document composition tools on their respective data devices 110, 111 and 112, into the finished insurance policy document. The compilation process may include the processing of the composed documents, if not already performed, with respect to qualified mail list data 602. For accessing the documents and/or data composed by the various other users 106, 107, and 108, the data center processor 120 may rely upon a central data repository 124--a shared database for accumulating composition data generated by the plurality of participating composition tool and authors 106, 107, and 108. Alternatively, the data center processor 120 may acquire composition data via direct communication with the one or more of the computers 110, 111, and 112. This compilation process may be overseen by an administrator 122 employing a high-end document and data composition software tool, such as BÖWE ONE Compose by BÖWE BELL + HOWELL Company. Also, one or more device control files, such as an inserter data file (IDF) which provides instructions on how an inserter is to prepare the documents in hardcopy form, may be associated with the documents composed by the data center processor 120.

In addition to the above, the document composition phase may further entail processes and tools for translation of documents into a specific printstream format, such that the resultant output is at least a print file 123 structured in accordance with a desired printstream format. As such, the composition data 124 may be compiled into a representative printstream/print file data format suitable for driving the operation of one or more printer devices 140-144 of the mail processing phase 104. Various types of print file formats are well known in the art for enabling the communication of softcopy documents with a printing device, including but limited to: postscript, SOLscript, variable postscript (VPS), VIPP, Metacode, Advanced Function Presentation (AFP), Printer Control Language (PCL), enhanced metafile (EMF) or Hewlett Packard Graphics Language (HPGL). The print file/printstream data may include instructions for regulating and controlling the behavior of the printer device--i.e., ink head spray pattern, ink head track positioning, ink disbursement rate, ink color release triggers, etc.

Those skilled in the art will recognize that the arrangement of document composition tasks, users and devices presented herein is exemplary in nature, and in no way limits the scope of the various teachings discussed herein. Certainly, the document composition phase 101 may be carried out in different ways via different arrangements and environments (e.g., a letter shop environment and/or arrangement versus a captive shop environment and/or arrangement). Likewise, the printstream processing phase 102, which in some instances may be performed analogous to the document composition phase 101, may be carried out in different ways via different arrangements and environments. For example, the printstream processing may run on the same hardware (one or more processors) as the document composition, or the printstream processing may run on separate processor hardware.

The printstream processing phase 102 may refer to instances wherein printstream data 126 existing in electronic form, i.e., one or more print files 128, 130, and 132, are manipulated or restructured to alter the expected document to be output by the printing device. In the former scenario involving processing of the composition data 124, the document composition tool may employ one or more print drivers/modules or the like to achieve conversion of the document composition data 124 to a print file 123 and/or printstream data 126. In the latter scenario, however, the printstream/print file data 128, 130 or 132 is received in its raw form, and must therefore be processed as such to form a printstream data 126 in accord with the desired format. This is not uncommon in certain processing environments, such as a letter shop having the responsibility of processing multiple print files 128, 130 and 132. Various printstream processing techniques and tools may be employed for manipulating, merging, or converting printstream data 126 input (e.g., print files 128, 130 and 132). Tools for performing applicable printstream processing techniques include, but are not limited to: Presort Accuracy, Validation, and Evaluation (PAVE) via Mail Manager 2010^{™} by BCC Software, or Transformer, Print Stream Optimization and ReCompose via the BÖWE One^{™} software suite from BÖWE BELL + HOWELL Company. Other printstream processing techniques and/or tools may include those for performing print file splitting, document re-engineering, print file data extraction, document indexing, etc. Also, various techniques exist for converting from one standard print file format to another (e.g., conversion from an Enhanced Metafile to a Windows metafile). It is not uncommon for printstream processing to occur in parallel with document composition depending on the type of operating system or document composition tool being utilized to compose the document. Indeed, the teachings are applicable to all instances of document composition and printstream processing.

Up to this point, the above described phases of the mail processing lifecycle 100 have pertained to instances of data processing prior to generation of a physical representation/hardcopy version of a document. Collectively, such electronic or softcopy processing as occurs during the document composition phase 101 and the printstream processing phase 102 of the mail processing lifecycle 100 may be referred to generally as preprint processing or electronic processing. The third phase of the mail processing lifecycle, however, referred to as the mail processing phase 104, corresponds to instances of hardcopy/physical processing of a document (print and post-print processing). This may entail the usage of one or more printing devices 140, 142 and 144 of various configurations for producing hardcopy/physical representations of the documents composed during the document composition phase 101 and manipulated in the printstream processing phase 102. By way of example, and not limitation, printers may be utilized in residential, commercial and industrial settings concurrently and independently for generating documents. Furthermore, the printers need not be located at any central location as it pertains to the fulfillment of the mail processing effort. Indeed, instances may arise wherein the documents (e.g., mail articles) may be printed at a separate location than that designated for generating mail articles and composing them into mail items. Indeed, the teachings herein apply to all environments associated with document processing, and are not limited to only automated document factory (ADF) environments, mail processing facilities, dedicated print shops, and the like.

In practice, mail processing facilities, ADFs and other environments for processing mails typically include a variety of different types of mail processors. Such mail processors may comprise equipment for processing hard copy documents, typically to print and/or form the desired mail articles and package the mail articles as mail items ready for handoff to the postal service as well as a variety of other processors associated with such hard copy processing equipment, for control or administration of the equipment or of associated mail processing resources.

A mail article comprises one or more documents processed and/or compiled for mailing, whereas a mail piece or item comprises a mail article which has been further processed so as to be ready for handoff to a postal or delivery service. For example, a completed mail article may be inserted into an envelope, to form a corresponding mail piece or item. Of course, the preparation for postal handoff may include a variety of other related processing operations by the processor(s) of the mail processing facility, such as affixing postage or a postal permit, sorting, etc.

A printstream is data in a form for driving a printer. A printstream may be delivered as an electronic data output signal or as an electronic print file. For mail processing operations, a printstream typically includes or is based on one or more electronic files representing a number of pages of documents intended for printing and processing in hard copy form as mail articles. Printstream information typically is an actual printstream, although the printstream information may be or may include other information about the printstream and/or electronic documents represented by data within the print stream, such as any information that may be obtained or developed from parsing or processing of a printstream.

Where printers are employed during the mail processing phase 104, printing devices under use may include a high speed color printer 140 and black and white printer 142 for generating color and black and white versions of documents respectively. Another printer 144 may also be employed for generating the first page of a document-i.e., a billing statement wherein the first page of the statement is generally of different (e.g. greater) length than subsequent pages of the document. In the case of a dual channel inserter, wherein two document input channels are utilized simultaneously, two different printers may be employed for providing hardcopy document input. So, for instance, an inserter configured to support dual channel processing may process the first pages of a plurality of billing statements generated by printer 144 via a first input channel, while processing subsequent pages of the plurality of statements as generated by the black and white printer 142 via its second channel.

The mail processing phase 104 may entail further usage of tools and procedures for preparing pluralities of documents at high speeds in order to generate mail articles-one or more completed/compiled documents intended to be directed through a postal network to an intended recipient. Consequently, various software, hardware, and firmware devices or tools other than or including the above described printers 140, 142 and 144 may be utilized for enabling document preparation and production. This may include, but is not limited to inserters 146, 148 and 149, sorters 152, computing devices, server devices 154, various databases 156 for storing mail processing data (e.g., mail article data, mail item data, production data, machine and process data, maintenance and performance data, supply chain management data, inventory, material and goods data) and various production software systems 158. Of course, a variety of human resources, such as machine operators and maintenance specialists, are also required for overseeing and facilitating many of the aforementioned systems, devices and tools. Obviously, those skilled in the art will recognize that various other systems, resources, tools and devices not expressly depicted herein may be utilized within a mail processing environment.

As further depicted in FIG. 1, a data engine 280 acts as a medium of data exchange, communication and interaction between the various processes, activities, events, devices, machines and resources employed throughout and during the phases of the mail processing lifecycle. The data engine 280 may be implemented as executable software operable via a server device 603 configured for data communication with processors of the various phases. The server 603 may further implement or interface with one or more databases 288 for enabling various functions (e.g., network configuration management, security features, session management processes). The database 288, for example, may contain data aggregated by the data engine as historical data. The data engine 280 enables the aggregation of data pertinent to the various processes, activities, events, devices, machines, people-i.e., resources-as they operate during execution of the various phases 101, 102 and 104 of the mail processing lifecycle 100. Data exchange may be facilitated via the express interconnection of the data engine 280 and the one or more resources associated with the mail processing lifecycle 280 through one or more interfaces (e.g., COM port, network connection, etc.). As will be seen later, the data engine 280 may be implemented to enable integrated management of a plurality of independent resources to facilitate dynamic control and interaction.

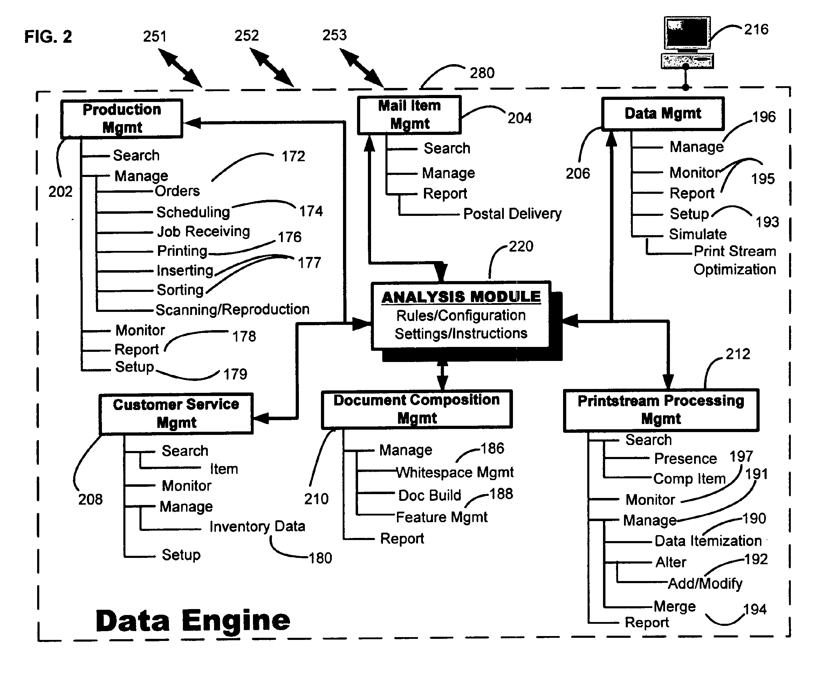

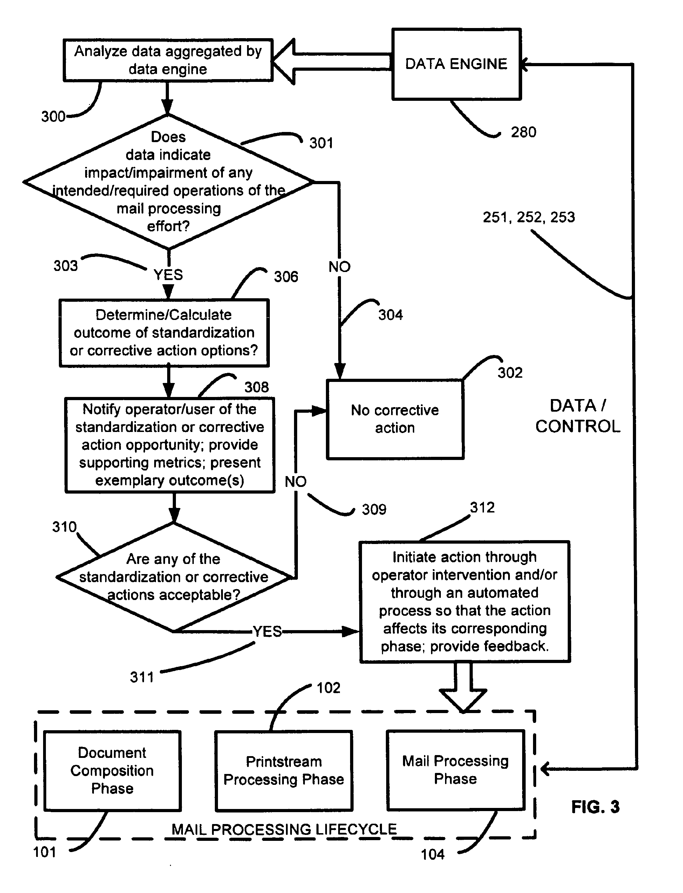

Such operative capability is depicted in FIG. 1, which shows a plurality of arrows 251, 252, and 253 representing the bi-directional interaction between the data engine 280 and the operations/resources involved in processing operations of the document composition phase 101, the printstream processing phase 102 and the mail processing phase 104 of the lifecycle. This interaction may include the exchange of data between the data engine and the one or more computing devices 110, 111, 112, 120, 154, 158, machines 146, 148, 149, 152, printers 140, 142, 144 and databases 124, 126, 156. In other instances, the interaction may include the initiation of various executable functions by the data engine 280 or user thereof in order to fulfill a desired task associated with the mail processing effort. Any known means of facilitating interaction, communication and data exchange between related or independent processes, devices, resources, etc. may be employed as a data engine 280, and is in alignment with the present teachings. Indeed, the data engine 280 may be implemented as software, hardware, firmware, and/or a combination thereof-i.e., a plurality of computers, servers, routers, database systems, software modules and applications, network systems, etc. (all represented by 603) operating in conjunction for enabling dynamic interplay. By way of example, and not by limitation, a modular software architecture for functions of a data engine 280 is presented with respect to FIG. 2; and an exemplary process flow of general operation of the data engine 280 is shown in FIG. 3.

The data engine 280 is implemented to enable the collection of information from a diverse group of resources, which may include mail processing equipment such as printers, inserters, sorters, software applications, user terminals, data repositories, and various human resources of the three processing phases. In addition, the data engine may perform various logical controls, functions and instructions for enabling further analysis and processing any collected/aggregated data. Preferably, but not by way of limitation, the analysis and processing capabilities afforded by the data engine 280 may come by way of one or more executable management control modules. The data engine 280, in aggregating data relative to the plurality of independently associated resources in operation throughout the mail processing lifecycle 100, may also provide a means of normalizing the data for common interpretation (e.g., common interpretation and presentment of data generated by sorter type A versus that of sorter type B). Further, the data engine 280 may enable execution of various control functions related to the data and mail processing operations that are to be performed by the system 100. An exemplary system for enabling such capability is described in detail with respect to Application No. 11/785,062 filed April 13, 2007, entitled "Browser Based User Interface for Dynamic Interaction and Control Within a Mail Processing Environment," which is incorporated by reference herein. In FIG. 2, the exemplary functional architecture of the data engine 280 is presented from the perspective of the mail processing lifecycle.

Modules shown in the drawing represent logical functions to be implemented by execution of data engine programming 280 on the server 603 or other computer. The programming may be written as corresponding modules of executable code or in a variety of other forms intended to achieve logical functions as shown in FIG. 2 and as described herein. From the perspective of the mail processing lifecycle 100, various exemplary key operational aspects may occur in execution of the mail processing effort. Each operational aspect of the mail processing lifecycle requires different types of management and/or management controls

In this exemplary model, the high level management functions of the mail processing phase (104 of FIG. 1) correspond to the following:

| | |
|---|---|
| Production Management 202: | Management control with respect to all mail jobs, resources (e.g., devices, machines, people) |
| Item Management 204: | Management control with respect to every mail item processed |
| Data Management 206: | Management control with respect to data and how it is organized, utilized, and presented |
| Customer Service 208: | Management control with respect to customer service functions (e.g., order fulfillment, maintenance) |

Data indicative of, but not limited to, event data, status data, resource data, metadata, etc. may be aggregated by the data engine 280 so as to enable proper employment of the management control modules upon the aggregated data.

In some instances, the above described management controls-implemented as one or more software modules executable with respect to the data engine 280-may correspond directly to those operations performed internally within a single mail processing environment (e.g., letter shop, captive shop, print shop, pre-sort bureau). In other instances, the plurality of management controls may correspond to operations performed in a distributed mail processing environment, such as by way of a plurality of separate mail processing facilities (in turn having a plurality of varying and separate machines, devices, processes, data, etc.) associated with a common mail processing effort (e.g., generation and distribution of a particular mail job). Also, in addition to the above, other operational aspects 210 associated with the mail processing lifecycle 100 may require management and/or control, such as personnel management, facilities management, inventory management, etc. In such cases, additional management controls may be implemented accordingly, or alternatively provided as additional functional capability of another referenced management control module.

As described before, the data engine 280 may engage in communication which the operations/resources occurring during the document composition phase 101 (arrow 251), the printstream processing phase 102 (arrow 252) and the mail processing phase 104 (arrow 253) of the lifecycle. The exemplary data engine 280 implements additional management controls, namely the document composition management control module 210 and the printstream processing management control module 212.

The document composition management control module 210 presents management control features and instructions pertinent to the activities of the document composition phase 101. Hence, via this control module, the data engine 280 may expose and/or interact (i.e., arrow 251) with the various processes, activities, events, data, resources, etc. that occur during this phase, including but not limited to: whitespace management 186 for regulating and/or analyzing the whitespace usage associated with a document being generated and feature management 188 for regulating and analyzing the various features associated with a document (e.g., text features, image features, page features, glyph characteristics). As a further example, the document composition management control 210 may call for the execution of various document composition tools, such as BÖWE One^{™} Compose from BÖWE BELL + HOWELL Company for enabling the management or processing of key data in the formulation of a document.

In the case of the printstream processing management control module 212, management control features and instructions pertinent to the activities of the printstream processing phase 101 is presented. From this control, the data engine 280 may expose and/or interact with (i.e., arrow 252) the various processes, activities, events, data, resources, etc. that occur during this phase, including but not limited to: printstream data itemization 190 for decomposing a print file into several data items representative of the characters, words, images, etc. of a document and printstream data modification 192 or merging 194 for enabling compiling of a plurality of different print files 128, 130, 132, so as to produce a single print file output. As a further example, the printstream processing management control module 212 may call for the execution of various printstream processing software tools, such as BÖWE One^{™} ReCompose from BÖWE BELL + HOWELL Company for enabling processing of print file data.

In general, each of the executable processing management control modules 202-212 as shown may have associated sub processes, each requiring further functions, tasks, activities, procedures, reports, and other management controls to be effectively executed. For example, as depicted in FIG. 2, to effectively manage production (e.g., a single job being performed by an inserter, or all jobs being performed by a plurality of inserters), a manager or operator may need to observe data related to and perform activities associated with all job orders 172, scheduling 174 of jobs, printing functions 176 to be performed to complete the job, reporting 178 (status reporting, historical data reporting, exception reporting, error reporting, efficiency reporting, postage and mail qualification reporting, etc.), setup requirements 179 with respect to a given job, etc.

Still further, the data engine 280 may employ an analysis module 220, which executes various rules, configuration settings and/or instructions that enable the data processing activities of the other management control modules 202-212 to be computationally integrated for enabling advanced analysis respective to the mail processing lifecycle. As with the other modules, the analysis module 220 may be implemented as software, wherein its analytic and computational capacity may be adapted in accord with rules or configuration settings-scripts that define the procedural, functional, implementation or infrastructural nuisances relevant to the mail processing effort. So, for example, a particular mail processing facility, mailer, operator, mail administrator or the like may define and establish software based protocol or rules scripts for regulating the use of particular mail processors (e.g., printers, inserters, sorters), or the use and scheduling of human resources (e.g., operators) or materials to meet job demands. As another example, certain configuration settings may be established or defined respective to one or more mail processors, such as maximum daily runtime, service requirement settings, equipment setup requirements, etc. In defining such rules, protocols or configuration settings, the analysis module 220 may analyze the various data processed by the one or more management control modules 202-212 in light of expected rules or configuration settings; ultimately, enabling it to flag instances of deviation from said rules or configuration settings. As such, the analysis module 220 may also be implemented to rely on historical data previously aggregated during real-time processing or data derived from processing of historical data-e.g., mail processor efficiency rates, inventory supply rates, job completion rates, print file processing rates-so as to detect changes in the conditions of the mail processing lifecycle. Once detected or flagged, the data engine 280 may communicate said occurrences, such as via a user interface 216 accessible by said administrator or operator.

Also, as stated previously, the analysis module 220 may perform various types of instructions for enabling the analysis of data exchanged between the analysis module 220 and the one or more management control modules 202-212. In general, but not by limitation, the analysis may be performed by the analysis module 220 from the perspective of (1) processing aggregated data to compute historical or real-time averages, and (2) processing aggregated data to generate useful metrics, comparisons, modules, etc. of said data Such instructions may be performed respective to the requirements and/or protocols of the mailer, operator or user, and may include instructions for:

**TABLE 1: Exemplary analysis capable of being performed by analysis module 220 along with complementary exemplary data types analyzed**

| **Exemplary type of analysis performed by analysis module 220** | **Exemplary Data inputs/management controls employed for conducting analysis** |
|---|---|
| Whitespace usage vs. paper size | Whitespace management feature 186; inventory data 180 |
| Machine type vs. document features | Inserter/Sorting management feature 177; feature management 188 |
| Document feature analysis | Feature management 188; data itemization 190 |
| Setup time vs. envelope usage | Setup management feature 193; inventory data 180 |
| Machine Runtime average; Machine Downtime average | Inserter/Sorting 177; Printing 176; reporting 178 |
| Throughput analysis | Monitor/Report 195; Inserter/Sorting 177 |
| Workflow analysis | Scheduling 174; Orders 172; Setup 179 |
| Any of the above vs. defined rules/expectations | Rules/expectations data; various management control modules and features |

Of course, other means of analysis not expressly shown herein may be implemented by those skilled in the art. Furthermore, skilled practitioners will recognize that the management control modules 202-212, and analysis module 220 and associated control features usable for enabling analysis as depicted in the above table are exemplary , and in no way limit the scope of the teachings herein. Ultimately, any means by which the analysis module 220 may interact with the other processing management control modules 202-212 for analyzing job requirements data versus any associated known data/events/rules (e.g., historical data or current resource data), is within the scope of the teachings.

Regardless of the means of implementation, the data engine 280 may manage, control, analyze, etc. various data, machines, events, processes, etc. as required relative to any and/or all phases of the mail processing lifecycle. Furthermore, the data engine 280 is exposed to the totality of the mail processing lifecycle, which in turn enables one accessing the data provided by the data engine to explore the interrelationships between phases. This is of particular advantage as all activities of mail processing from initial document creation and list generation, to mail article preparation and readiness may be managed, controlled and/or analyzed accordingly (e.g., as one or more management control modules and features made available via a web browser application 201). Furthermore, logical instructions or tasks desired to be carried out-such as by an operator or mail processing facility administrator-to affect or influence the mail processing lifecycle may be performed via the one or more process management control modules 202-212. As will be described in greater detail later on, real-time interaction and data access of this nature provides an opportunity to standardize the various activities, events, devices, resources, processes, etc. across the entire mail processing lifecycle.

The data engine 280 may provide a web-based interface (e.g., as rendered via a user interface 216) to allow a user (e.g., operator, administrator or other authorized party interested in operations of the mail processing lifecycle) to interact with the mail processing lifecycle 100, and specifically to provide an easily accessible interface to engage the above described management control modules 202-212. Web services, also known as application services to those skilled in the art, is a standard way of integrating web-based applications using the XML, SOAP, WSDL, UDDI and other communication standards over an Internet protocol backbone. The data engine 280 may employ one or more web services to facilitate the exchange of business logic, data, etc. between the executable modules 202-212 and 220, and the plurality of resources (e.g., sorters, inserters, computers, software, operators) operable throughout the execution of the mail processing lifecycle 100 for execution of a specific mail processing effort. As such, web services acts as a medium for implementation of the various modules required to enable the various management controls via a browser based session (e.g., Internet Explorer browser session).

Practitioners of the art will recognize the advantage of such an interface as provided by the data engine 280 in allowing convenient organization of the numerous operational processes of a mail processing environment and/or the mail processing lifecycle 100. Moreover, practitioners of the art will indeed appreciate the easy adaptability afforded by a browser-based interface for observing, connecting with and controlling mail processing tasks, which is highly suitable for change management. Of course, it will be recognized that various other means of implementing the data engine 280 and corresponding management control modules 202-212 and analysis module 220 for enabling real-time interaction other than web services may be employed. Examples include, but are not limited to platforms such as Java, J2EE and .NET. Indeed, the exemplary teachings herein are not limited to any one means of implementation. Furthermore, the depth of features afforded by the management control modules 202-212 and associated analysis module 220 may vary depending upon the individual requirements of the mail processing facility, mailer, operator, administrator or user, all of whom are associated with the mail processing effort (e.g., generation and distribution of a mail job). Hence, those presented are by way of example only, and not meant to limit the scope of the teachings. The architecture of the data engine 280 as described herein may be adapted accordingly, and any variation or form of data engine may be employed while remaining within the scope of the present teachings.

Reference is now made to FIG. 3, a flowchart that depicts the exemplary process by which adaptive/predictive/corrective action may be enabled using the data engine 280. As discussed above, the data engine 280 aggregates data in real time from all three processing phases (via arrows 251, 252, 253 shown collectively in FIG. 3). The data engine processing begins with an analysis of the data representative of the mail processing lifecycle as aggregated by the data engine 280 to determine if any of the data stored therein indicates an impact on and/or impairment of the current or planned operations required to fulfill the mail processing effort (events 300 and 301). Various types of analysis may be performed relative to the requirements and/or protocols of the mailer, operator, administrator or user such as described above with respect to Table 1. As stated previously, the data engine 280 has the appropriate interfaces (e.g., connectivity schemes, authorization, network configurations) with the processes, devices, resources, machines, data, etc. of the document composition phase 101, printstream processing phase 102 and mail processing phase 104 of the lifecycle. Hence, data of interest that may indicate an unfavorable impact on current or future operations may include, but is not limited to, data indicative of: a machine being down, operator unavailability, poor material availability, print file format incompatibility, document composition incompatibility, etc.

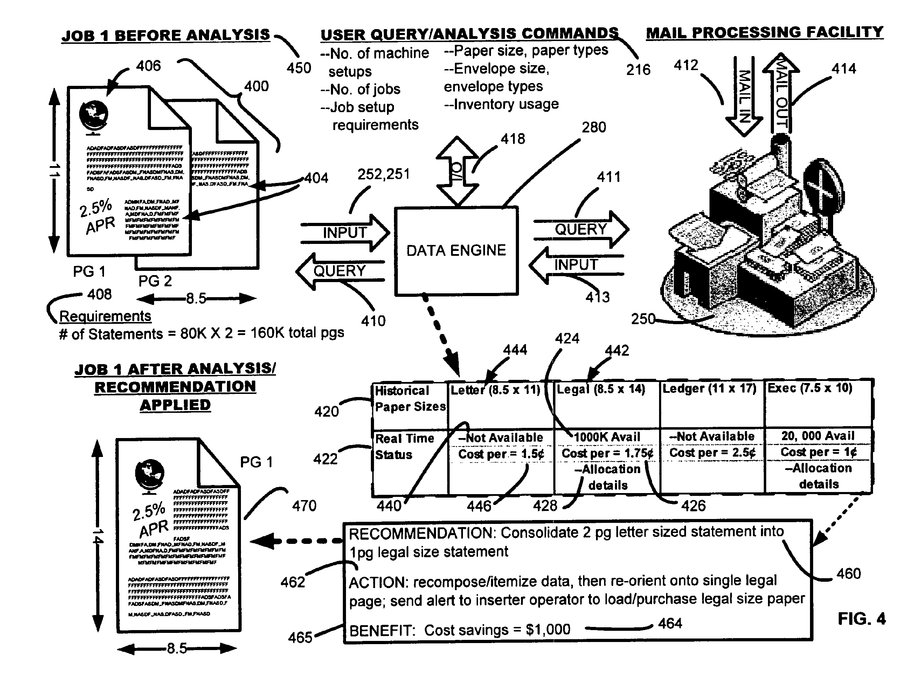

Upon analysis, when favorable, i.e. none of the real-time aggregated data is determined to adversely impact and/or impair the mail processing effort (event 304), no corrective action is performed (event 302). However, when the data is determined to be of significance (e.g., of detriment to the mail processing effort) (event 303), further analysis is conducted (e.g., via the one or more management control modules 202-212 and the analysis module 220 of the data engine 280) to determine if the impact can be minimized or eliminated through standardization and/or corrective action (event 306). The analysis at this point may include accounting for various logical processing considerations based upon the determined data of interest, i.e., as performed by the analysis module 220 of the data engine 280. For example, in the exemplary scenario of FIG. 4, the data of interest may be the job requirements data 408, which indicates a need for 160,000 pages, and the real time inventory status information, which indicates a lack of available paper 440. Hence, the consideration may have included: Are other paper types available? Are there enough of the other paper types to fulfill the job requirements 408? Can the document be printed upon the other paper legibly? Can the document be reformatted to be printed upon the other paper legibly? What benefits and/or advantages result from the considerations? Can the job requirements be refined to enable more advantages than originally anticipated (e.g., duplex processing of pages)? Of course, these are exemplary in nature only, as numerous other logical considerations may be required and/or implemented by those skilled in the art. Indeed, the logical considerations may even be patterned with respect to known manufacturing and process optimization techniques and principles, such as Lean Manufacturing, Supply Chain Management, ISO 9000, Six Sigma, 5S (Kaizen), Extreme Programming, and Balanced Scorecard.

Once the analysis is complete and suitable for revealing a potential standardization or corrective action, a notification or recommendation regarding this result may be generated (event 308 in FIG. 3) and sent to a user/operator/administrator. Accompanying this recommendation may be one or more metrics and/or benefits information useful for informing the receiving party enough to make a decision as to whether to accept the corrective action or standardization. In general, the notification or recommendation may be generated as a display to a user interface (e.g., the operator user interface of an inserter), or may be generated as a network message or e-mail communication. Alternatively, in the case of a machine event or the like, the notification may even trigger an alarm or visual signal (e.g., flashing siren).

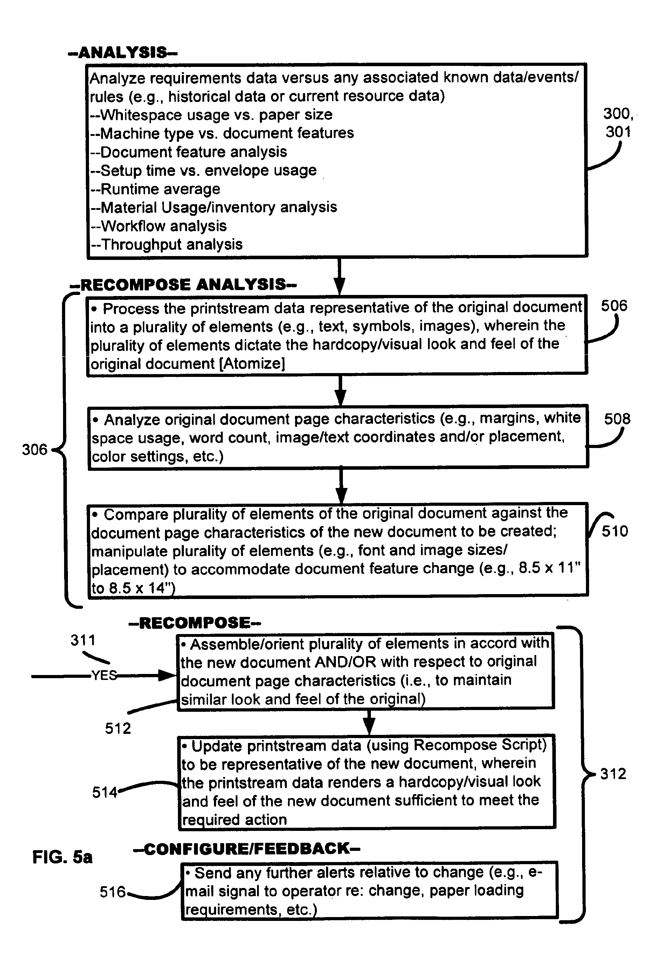

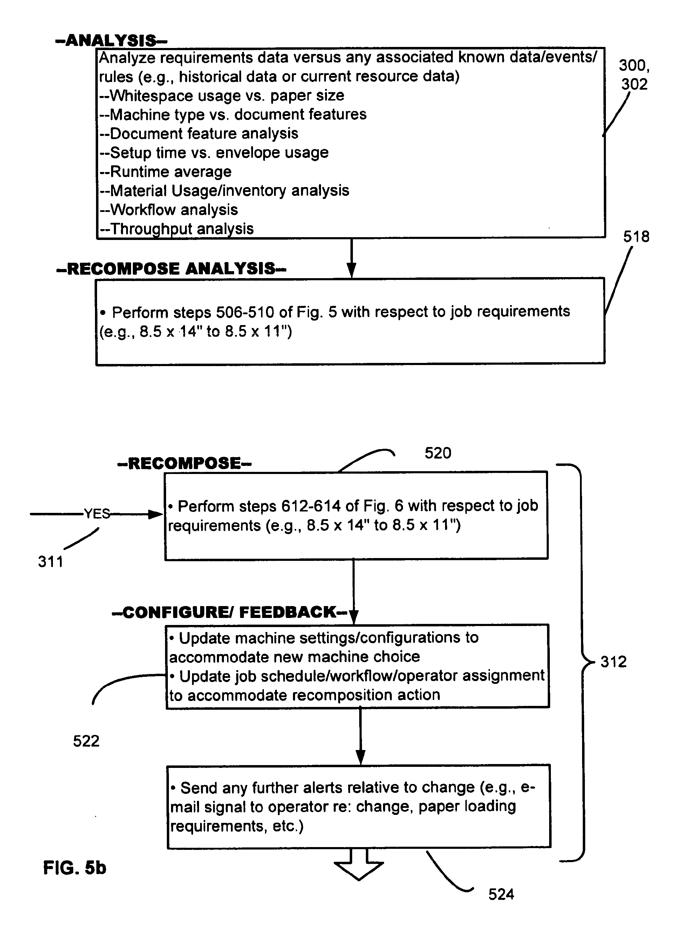

The receiving party determines that the presented corrective action yields an advantage and/or benefit to the mail processing effort (event 310). If an action is not acceptable (event 309), no action is taken (event 302). However, if the determination at 310 is that a recommended action is acceptable (event 311), the recommended action is initiated (event 312). Depending on the configuration requirements, the action may be performed in coordination with the requesting party or in some instances, automatically. Ultimately, the response to the notification or recommendation (e.g., a request to perform a specific action) is transmitted to the appropriate management control module of the data engine 280 capable of fulfilling the corrective or adaptive action through interaction with the processor(s) of the appropriate processing phase 101, 102, 104. The management control module may perform the instructions required to fulfill the request, or call the appropriate software/hardware/firmware modules needed to fulfill the request with respect to the appropriate phase 101, 102 and 104 of the mail processing lifecycle to be adapted. In other instances, the recommendation may be executed dynamically (e.g., without response to the recommendation-dynamic execution as opposed to request driven execution) on the basis of past decisions, or other criteria. A practical example of the exemplary process of FIG. 3 is illustrated with respect to FIGS. 4, 5a and 5b, as discussed in more detail below.

FIG. 4 depicts an exemplary process by which real-time aggregated status information relative to a specific phase of the mail processing lifecycle may be utilized to influence another phase-i.e., to enable a corrective action to commence. Specifically, the figure depicts a process wherein a plurality of documents 400 destined for processing within a mail processing facility 250 (corresponding generally to the activities and operations relative to the mail processing phase 104) may be manipulated or altered (during the document composition processing phase 101 or the printstream processing phase 102) in order to enhance the efficiency and/or effectiveness of the overall mail processing effort. As shown, a mail job to be processed 450 requires the printing of and preparation of a plurality of letter sized (8.5" X 11") documents 400. In this example, the job requirements data 408 calls for 80,000 documents 300 to be processed, where each of the documents is two pages in total, labeled PG 1 and PG 2. The job requirements data 408 may also specify additional information, such as job completion time and date, machine requirements, operator requirements, workflow requirements, etc. As is well known to those skilled in the art, job requirements data 408 enables evaluation of the scope of the mail processing effort in relation to capacity of the mail processing facility 250.

Each of the plurality of documents 400 is designed in the composition phase to have various markings such as text 404 and images 406 having various features (bold, italics, color characteristics, etc.), and the text 404 and images 406 are oriented onto each respective page in accord with specific page features (margin spacing, character spacing, line spacing, etc.). The composition effort may be carried out at a location different than that of the mail processing facility 250 for which the documents 400 are to be processed, or alternatively, onsite. Whether performed offsite or onsite, the respective phases of the mail processing lifecycle still apply. Generally, the job data before analysis 450 is received as one or more print files representative of the documents along with corresponding processing instructions, where the general format and appearance of the intended hard copy documents 400 is the result of the document or printstream processing tool used. The job may be placed into a print queue or job queue once received for processing.

In accordance with the present teachings, the data engine 280 receives notification of, or detects the presence of the job-i.e., received as printstream processing data-upon its creation or receipt. For example, with regard to the data engine 280 implementation portrayed in FIG. 2, the management function/module 191 of the printstream processing control module 212 may detect the print file(s) representative of the job (the plurality of documents 400), i.e., via the monitor function 197 as they are stored as input 123 in FIG. 1 to a print buffer 126. Also, the various job requirements data 408 associated with the received print file(s) may be detected and/or retrieved by the data management control module 196, i.e., via the monitor function 195. Regardless of the chosen implementation, detection of the print file and requirements data may result from the generation of a signal or flag by a print server, printer device, software application, etc. where the signal is relayed to data engine 280.

Detection by the respective management module 197 or 191 triggers an information input 252 to the data engine 280. Hence, a user having access to the control management control modules 202-212 and the analysis module 220 may query functions within the data engine 280 for information. Alternatively, the data engine 280 may persistently or periodically query the various resources themselves, and its stored data via database 288, in order to detect the presence of any new data or signals, or query the appropriate devices, machines, processes or resources directly. Query operation is represented by arrow 410 in FIG. 4.

Pursuant to the teachings, the data engine 280 may also receive as input information pertaining to the events, processes, activities, resources, machines, etc. influencing the operations of the mail processing facility 250. As used herein, information of this nature as it relates to the mail processing facility is deemed status information. Moreover, the status information is data associated with the various key operational management aspects of the mail processing facility 250. Status information pertaining to the mail processing phase 104 may be received as input 413 by the data engine 280 in concurrence with, or separately from, received data 252 pertaining to the printstream 102 or received data 251 pertaining to the document composition 101 phase. As described above, the status information may be acquired through persistent or periodic querying 411 of the equipment and/or processes associated with the mail processing facility (e.g., sorters, inserters, servers, computers, production data, item data) as initiated by the data engine 280, or via automatic data updating 413 as initiated by the corresponding device and/or process itself.

Status Information stored with respect to the mail processing facility 250 may include, but is not limited to: machine and/or process data-i.e., names, identification values, floor locations, machine type and model values, network configuration data, batch processing schemes; machine and/or process setup requirements-i.e., dual channel processing, network resource allocation data, database access requirement data; machine and/or process maintenance and error diagnostic data; machine and/or process performance and efficiency data and metrics; resource data-i.e., inventory data, personnel data; mail item data-i.e., mail input 412 (received such as for sorting operations) and output 414 (delivered via a postal authority) data; production data, mail item profile and tracking data (e.g., barcode, sequence number, timestamp information), customer service data, etc. Essentially, any data associated with the key operational management control modules 202-212, and data analysis module 220 as shown in FIG. 2 is accessible to the data engine 280 as status information. Status information changes in the mail processing facility 250 results in updating of data as it occurs, and the respective data may be maintained or logged for future (historical) recall. Still further, the data engine 280 may itself query its data store 288 in order to obtain or relay information pertaining to the status of the mail processing facility 250 both current and historical.

The data engine 280 offers a user input/output (I/O) capability 418, for example via the above discussed web services. For example, with regard to the data engine 280 implementation portrayed in FIGS. 2 , a user may query 216 in FIG. 2 and 4 via the myriad of management control modules for various information, including but not limited to: the number of machine setups required, the number of jobs currently being run as well as expected to be run by the mail processing facility 250, job scheduling and workflow data, and any other useful information. Given the broad array of persistently updated/real-time data available to the data engine 280, a user may also ascertain information regarding the incoming print jobs 450 destined for processing by the mail processing facility 250. As such, current status information is known along with the current/pending job data 450 (e.g., print job) to be processed; and the information access is suitable for enabling the data engine 280 to perform advanced analysis and/or dynamic alteration of processes occurring in either phase based upon the information. Again, those skilled in the art will recognize that various systems may be employed for fulfilling the user query request process, and that the exemplary means of implementation herein is not meant to limit the teachings.

With this in mind, the exemplary figure demonstrates a process involving altering of the job 450 (e.g., corresponding to the printstream processing phase 102 in the instance of a print job) based on current/real-time status information associated with the mail processing facility 250 (the mail processing phase 104). Having acquired data relative to the job 450 along with the job requirements 408, the data engine 280 analyzes inventory status information. In this example, historical supply chain or inventory management information 420 may be recalled by the data engine 280 for analysis against current/real-time inventory status information 422. The historical inventory status information 420 in this example reveals the myriad of paper sizes/types traditionally employed by the mail processing facility 250, such as resulting from numerous jobs being run over a period of time. It will be seen in later sections of the written description how historical status information 420 may be utilized to affect and/or alter other phases of the mail processing lifecycle.

Alternatively, the current/real-time inventory status information 422 may be accessed to reveal data representative of the current status of the mail processing facility 250, such as the current paper sizes/types available for use within the mail processing facility 250 (as opposed to historical status which details all of the paper sizes/types ever employed within the mail processing facility 250), the quantity and availability of the paper 424, associated per sheet cost 426, relevant paper allocation details (e.g., rules of use, distribution status, procurement details), etc. and any other information useful for determining the ability in the mail processing phase 104 to fulfill the job requirements 408 by the one or more processing devices associated with the mail processing facility 250. Real time status 420 shows status of letter size in record 444, including cost per sheet 446 and in this case, that letter size paper is not available 440. The record 442 for legal size indicates that that size paper is available 424. Hence, in the example, upon analysis, the data engine 280 determines that the resource(s) (e.g., 8.5" x 11" sized paper) needed to fulfill the job requirements 408 are not available at the moment (160,000 letter sized pages not available 440), but legal size paper is available (1000K sheets available 424). Consequently, the data engine 280 may provide data which facilitates various exemplary actions to be pursued on the basis of the analysis, including but not limited to:
1. Recommend a corrective or constructive action to be executed 460/462, and optionally communicate the benefits 465 and/or savings outcomes 464 of the action upon execution (request driven execution).
   ° The action recommended 460/462 if implemented resulting in the alteration, modification, or processing of document composition and/or printstream processing data on the basis of advanced awareness of mail processing facility status information.
2. Execute a corrective or constructive action 460/462 without recommendation (i.e., dynamic execution such as based upon preset rules), and optionally communicate the benefits 465 and/or outcomes 464 of the action upon execution.
   ° The action recommended 460/462 resulting in the alteration, modification, or processing of document composition and/or printstream processing data on the basis of advanced awareness of mail processing facility status information.

Options 1 and 2 as presented above enable conditions/statuses/events/occurrences/etc. affecting the mail processing effort or job 450 to be sensed (e.g., via analysis of relevant data by the data engine 280) and then adapted to in real-time. Stated differently, the present teachings provide a means of intelligence/data-i.e., 420 and 422-to be received in advance based on all phases of the mail processing lifecycle 100, for analysis to identify improvement such as to eliminate or adapt to any impedances or limitations that may currently or later thwart the effectiveness of the mail processing effort. This data may then be further processed via one or more of the various management control modules 202-212 and the associated analysis module 220 of the data engine 280 so as to ascertain further metrics, calculations, and/or intelligence of interest relevant to the effectiveness of the mail processing effort (e.g., throughput analysis as monitored 195). Practitioners of the art will recognize that the recommendation 460, action 462 and benefit 464 information (e.g., box 465) are developed by the data engine 280 pursuant to analysis of any aggregated data versus at least the job requirements, and then communicated via I/O 418 with an interested user (i.e., to an operator associated with the processing job 450). In the example of the recommendation and/or benefit information 465 being communicated via a web browser or the like, the user can then affirm (e.g., accept) or reject the information 465 as presented via the I/O 418.

It may help to consider an example of option 1. In such a case, the data engine 280 may recommend 460 to a user interacting with the data engine 280 via a browser, based on the analysis, that the plurality of two page letter sized documents of job 450 be consolidated into a plurality of one page legal sized documents. This request and the attendant correction (if accepted) affects the resultant output of the mail processing phase 104, as enabled through the action 462 of manipulating the printstream processing data (e.g., print files) representative of the job 450. By operating upon the printstream processing phase 102, the various markings 404 and images 406 resident upon the documents may be oriented suitably for achieving the single page legal sized paper consolidation 470. As stated previously, the data engine 280 may facilitate such action through invocation of various printstream processing techniques and/or tools, such as BÖWE One^{™} Compose or ReCompose software from BÖWE BELL + HOWELL Company. The resultant benefit 464, as illustrated, is a cost savings of $1000, not to mention the ability to meet the job completion date/time through advanced corrective adaptation or action (as opposed to hindsight or on-demand corrective action).

FIG. 5a depicts the exemplary ReCompose analysis steps which may be employed in performing the determination/calculation step 306 of FIG. 3 relative to the example portrayed in FIG. 4. The ReCompose Analysis and/or determination may include processing of the printstream data of job 450 representative of the original documents 400 into a plurality of elements (e.g., text, symbols, images), wherein the plurality of elements dictate the hardcopy/visual look and feel of the original document (event 506). Next, the data engine 280 may analyze-i.e., via its analysis module 220-the original document 400 page characteristics (e.g., margins, white space usage, word count, image/text coordinates and/or placement, color settings, etc.) (event 508). Finally, a comparison of the plurality of elements of the original document against the document page characteristics of the new document to be created may be performed. During this time, various features of the plurality of elements (e.g., font and image sizes/ placement) may be manipulated to accommodate the document feature change (e.g., 8.5 x 11" to 8.5 x 14") (event 510).

Upon acceptance of the recommended corrective action 311, the action may commence as presented with respect to event 312 of FIG. 3. This may include assembly/orienting of the plurality of elements in accord with the new document and/or with respect to the original document page characteristics (i.e., to maintain similar look and feel of the original) (event 512 of FIG. 5a). Next, the printstream data to be representative of the new document may be updated accordingly (e.g., generation of a ReCompose script), wherein the printstream data renders a hardcopy/visual look and feel of the new document sufficient to meet the required action (event 514). These capabilities may be implemented via the data itemization feature 190 of the printstream processing management control module 212, or by simply calling upon the execution of the ReCompose software by the data engine 280. During or upon execution of the action, any further alerts, notification or feedback relative to the corrective action or standardization action performed may be communicated (event 516), such as via e-mail or through invocation of a message to the user interface. Furthermore, as depicted in the example of FIG. 5a, fulfillment of the recommended action (event 312) of FIG. 3 may require various additional configuration/feedback responses by the user/operator/administrator. For example, in the case of the print job/printstream data 450 being altered to render a new result 470, the user/operator/administrator may be required to adapt the inserter sheet feeder settings to accommodate 8.5 X 14" paper, load the sheet feeder with the appropriate paper, assign a new operator, etc.

In the absence of the above described corrective action capability, the totality of the mail processing effort would be hampered-i.e., present day practice within the art. For instance, the job 450 as described above would be left undone until the needed resources (e.g., paper of a size corresponding to the job requirements data 408) were subsequently procured. Alternatively, the print job 450 could be printed upon the available legal size paper 432, despite the obvious aesthetic limitations and cost inefficiencies resulting from the printing of a document formatted for 8.5" x 11" sized paper onto 8.5" x 14" sized letter paper. From an aesthetic viewpoint, doing so would result in excessive additional whitespace on both pages P1 and P2 of the printed document, essentially resulting in inefficient paper usage. From an economic viewpoint, printing onto the improper sized document would increase the cost of job 450 completion, as the legal sized paper 432 at a cost 426 of $0.0175 outweighs the cost of $0.015 per sheet of the letter sized paper 434. Still further, but still of no apparent advantage, the job 450 could be terminated or postponed pending the updating of the documents 400 that comprise the job. Obviously, none of these options are effective in hindsight, as they all impair mail processing efficiency in one way or another (e.g., time constraints, additional man hours, workflow/production impedance) due to lack of advanced awareness and predictive action to be pursued based upon the various conditions, statuses, events, occurrences, etc. affecting the mail processing effort or job 450.

As an example of a standardization action relative to the printstream processing phase, consider again the job 450 of FIG. 4. Having made the adaptations of the printstream data 450 to render new document result 470, the determined corrective actions 506-510 (corresponding to FIG. 3, 306) and corresponding analysis results 300 and 301 may be stored for future use. As such, the data engine 280 may recall this analysis in future instances of jobs received, and be able to apply it readily. For example, the data engine 280 having access to the printstream processing phase 102 can automatically recommend or analyze pending jobs and the structures of their associated printstreams 123, 128, 130, 132 to determine similar changes that may be applied relative to the current known (e.g., fixed) mail processing resources to be employed. Having established a precedent (e.g., past scenario) for which to apply the ReCompose analysis (e.g., rules based on historical scenarios and data), the data engine 280 may correct the printstream automatically each time a printstream with the same configuration is detected. Of course the data engine could alternatively elicit user feedback and permission before execution of the action relative to the determined scenario, or even provide the same alerts and prompts to the resources operating in the document composition phase 101 in advance of the generation of a print file. Hence, for processing or encountering a known scenario, the same action applied before may be invoked resulting in a form of standardization.

Practitioners of the art will recognize however that the above described scenario is only one of a plurality of exemplary situations benefiting from application of the teachings herein. Indeed, there are numerous other examples of events, occurrences, resources, etc. that may impact the effectiveness or efficiency of the mail processing effort. For instance, the status of a machine or device operable within the mail processing facility 250 may present an opportunity for corrective action. Consider the example wherein a job is generated (e.g., documents or print files composed) that requires processing by a dual channel dependent processing inserter device. Devices of this nature generally employ two document input channels, where the first channel processes documents of a larger size (e.g., single document 470), which are generally intended to be the first page of a document, i.e., a billing statement. The second channel, operating in concurrence with the first, processes the subsequent pages of the document, which are typically of a smaller size than the first page (e.g., such as documents 400). The pages comprising the document, the first page of larger size (e.g., document 470) and the subsequent pages of smaller size (e.g., documents 400), are eventually merged together as a mail article during the accumulation and arrangement phase of processing by the inserter device.

Upon compilation of the job (e.g., into a print file), it is forwarded to the mail processing facility 250 and placed in queue (e.g., a print buffer) for processing. If the only dual dependent channel inserter device within the mail processing facility 250 was down-i.e., due to a malfunction-the job along with its above stated processing requirements are still in queue. Determining the occurrence of such an event within the mail processing facility would correspond to event 300 and 301 of FIGS. 3 and 5b. Hence, only subsequent to actual generation of the electronic document, in this scenario, would it be known that the dual channel inserter device was not available. Had this been known in advance, however, the document could have been composed with respect to a different mail processor, such as a single channel inserter. Such disconnect between the status of the mail processing facility 250 and that of the document creation phase 101 or printstream processing phase 102, impairs the mail processing effort, particularly negatively impacting the production timeline and cost. Receipt of the job in a format intended for dual channel processing could delay completion of the job-an especially time critical task in cases where the documents to be rendered are billing statements or the like of a time critical nature. The job would at best be halted pending alteration of the electronic document and assignment for processing on a different inserter, or repair of the required inserter. If the problem was not detected prior to printing of the documents in the job,

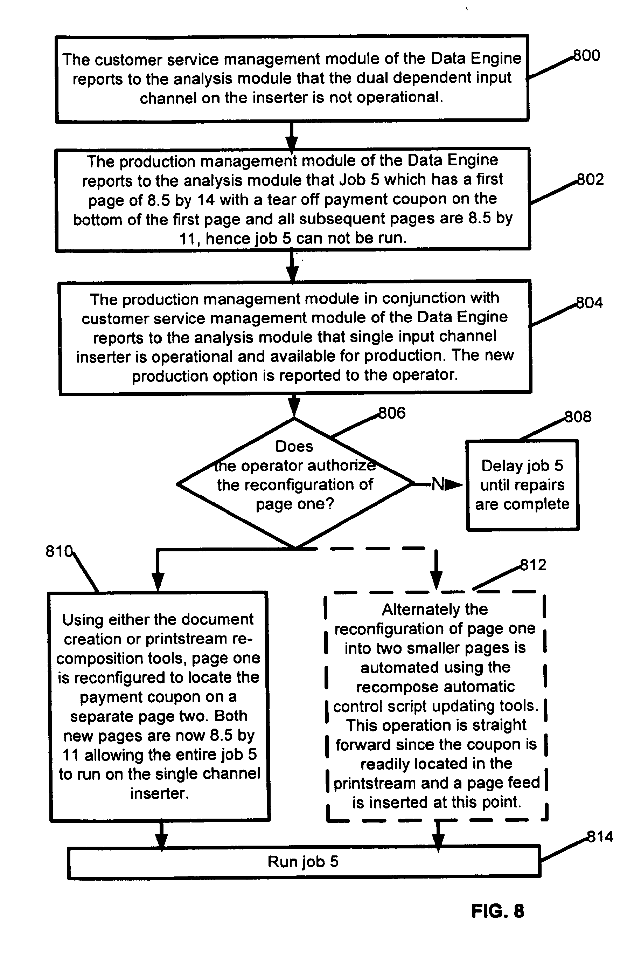

To address this issue, the present teachings employ analysis through the data engine 280 to enable a recommendation of or actual execution of a corrective action based on advanced data pertaining to the status of the inserter device, and the job to be processed. For example, the data engine 280 may perform analysis (events 300 and 301, FIG. 5b) in order to investigate the various corrective or standardization actions available relative to known data. As an exemplary corrective action, the data engine may determine that the Compose or ReCompose software could modify the print file so as to accommodate the single channel inserter (e.g., format change) (event 518). Next, the data engine 280 may generate an alert or recommendation to an operator providing notification of this corrective action. Upon acceptance, the ReCompose processing may commence (event 520), and the operator may then be prompted to setup the single channel inserter device accordingly (event 522). The prompt(s) may be generated as one or more messages to the operator based on alerts and queries or through direct software control (event 524). The modification(s) of the selected equipment and/or the printstream format may be performed based on advanced data representative of the functional status of the devices available in the processing facility 250, or the requirements data associated with the job. More regarding this scenario will be presented with respect FIG. 8.

Still, as yet another example, the data engine 280 may communicate with an author of a document, operating in the document composition phase 101, to be processed by a dual channel dependent inserter device to alert the author of its present unavailability or malfunction status. In this way, the document composition effort by the author may be adapted to accommodate processing by an available device. Of importance to this example is the fact that the alert may occur during the document composition phase and before actual forwarding of any printstream data representative of the document for hardcopy processing.

As yet another example, the present teachings enable predictive or corrective action to be taken in response to changes in mail processing facility configuration. For example, a machine or device newly added to the factory, and available for enabling job processing may provide enhanced mail processing benefits. Consider the case where a multipage document composed for processing by a single channel inserter device could potentially be produced more effectively and economically if processed by a dual channel inserter device (e.g., the first page of the document can be of a larger size to accommodate greater content and hence reduce page count). Once the document is composed-i.e., text alignment, page formatting, image placement-and converted to a printstream data format, modification could only be made after the fact. However, in accord with the present teachings, configuration status information pertaining to the newly installed device may be relayed during the document composition 101 or printstream processing 102 phase, such that corrective action may be taken in response. Such corrective action may include, but is not limited to, the generation of an alert to the author of the compose tool of the availability of the newly installed inserter device.

Another corrective or predictive action may include an instruction to manipulate the printstream representation of the document upon its placement into the queue/print spooler for processing. In such a case, the corrective action may be prescribed or recommended subsequent to analysis of the print file/printstream upon its receipt to identify a corrective opportunity. For example, a whitespace analysis (e.g., as made available via the whitespace management feature 186 of the document composition management control module 210) may be performed on all received print jobs, such as to determine which documents represented by the print file(s) present additional whitespace; specifically enough to enable the placement of additional content therein. The additional whitespace may present an opportunity for the addition of an advertisement, a coupon, images, text, etc., which may be appropriately added and placed onto the document via a printstream composition tool (e.g., ReCompose) or the like. The analysis, such as performed by the analysis module 220, may include a determination of the location and relative area of the representative whitespace versus the area to be occupied by the additional content-to ensure proper whitespace availability. Hence, rather than simply enabling or prescribing a means of document content consolidation, a means of document content addition may be presented as a corrective action. Still yet, another corrective or predictive action may include the generation of an alert to an operator or installer of the new device to setup the device in accord with the job requirements data (e.g., 408 in FIG. 4) as it is to be received, i.e., job requirements data as indicated in an IDF file constructed during the document composition phase 101 or the printstream processing phase 102. Hence, advanced action or instructions to be carried out may be initiated on the basis of real-time or current data representative of all phases of the mail processing lifecycle through system 100.

Those skilled in the art will recognize that the ability to access data from all phases of the mail processing lifecycle, analyze the data as it relates to mail processing operations, and recommend and/or invoke action on the basis of the analysis-even in advance of any particular operations by a particular phase of the mail processing lifecycle-is of tremendous value. Indeed, it will be appreciated by practitioners of the art that the teachings herein provide a system and method of predictive or advanced corrective action to be invoked for affecting the mail processing lifecycle. Also, the present teachings as presented herein may significantly impact the rate at which various activities or processes that affect the mail processing effort may be performed, such as machine setup and configuration, work flow and job scheduling, resource and people allocation, job prioritization, inventory usage and ordering, document and printstream processing and rules determination, etc. regardless of the particular phase of the mail processing lifecycle in which the document is currently being processed.

Numerous other aspects of the mail processing facility 250 statuses may have a production impact that can be corrected or partially corrected by making changes to the printstream. Effective utilization of the data engine 280 allows for the corrections to be made with minimal unfavorable impact on the production process. The changes to the printstream prior to printing may be complex such as the example just cited, or the changes may be fairly straight forward such as converting from a black and white printout to a color printout due the unavailability of the B/W printer. Even though this change would increase the printing cost, the change may be justified due to mandatory production schedules. The requirement to initiate corrective action, such as reprinting of mail items that were damaged during production is an additional example for utilization of data engine 280 feedback to printstream processing 102 in order to ReCompose the print file for the damaged documents into a print file compatible with a different printer, which is used for reprinting.

Standardization of mail processing operations can produce significant benefits for production operations. For example, by utilizing similar paper sizes (whether cut sheet, fan fold or roll paper which is cut on the inserter) and a common envelope size, economies can be achieved by stocking one pager size and the same envelope size for a variety of production jobs. Achieving standardization can reduce material and stocking costs. Production efficiencies also are improved since the setup time for the inserting equipment is significantly reduced. Paper and envelope guide adjustments are eliminated when a new job is started, plus there is a limited amount of run-in required where a volume of production material is run to verify that all adjustments are correct and mail piece damage and jam stops are minimal. No standardization tools exist in the mail processing environment to facilitate standardization.

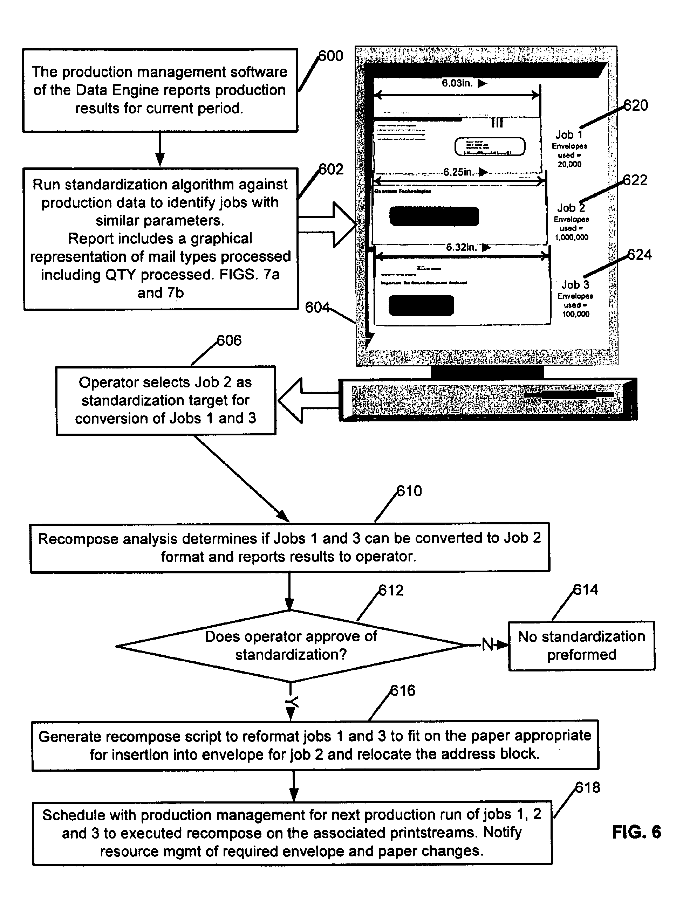

FIG. 6 is an example of how standardization is achieved using automated processes and operator managed decisions. The production management software module 202 in the data engine 280 collects data associated with all mail processing jobs being run in the facility 250. The reporting of this production data 600 can take many forms, to include but not limited to display formats and tabular data. A standardization algorithm 602 is run against the job production data to identify jobs with similar parameters, such as envelope size.

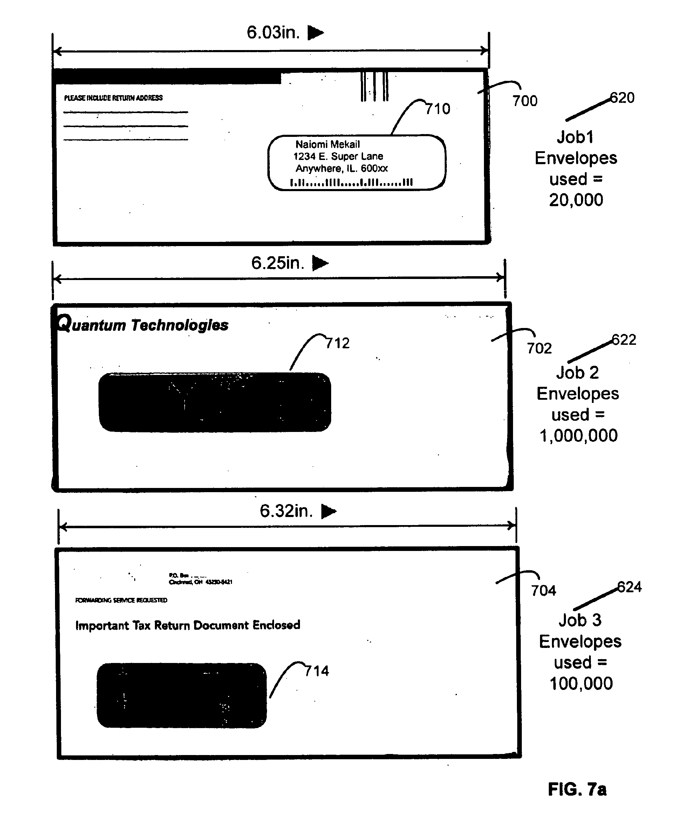

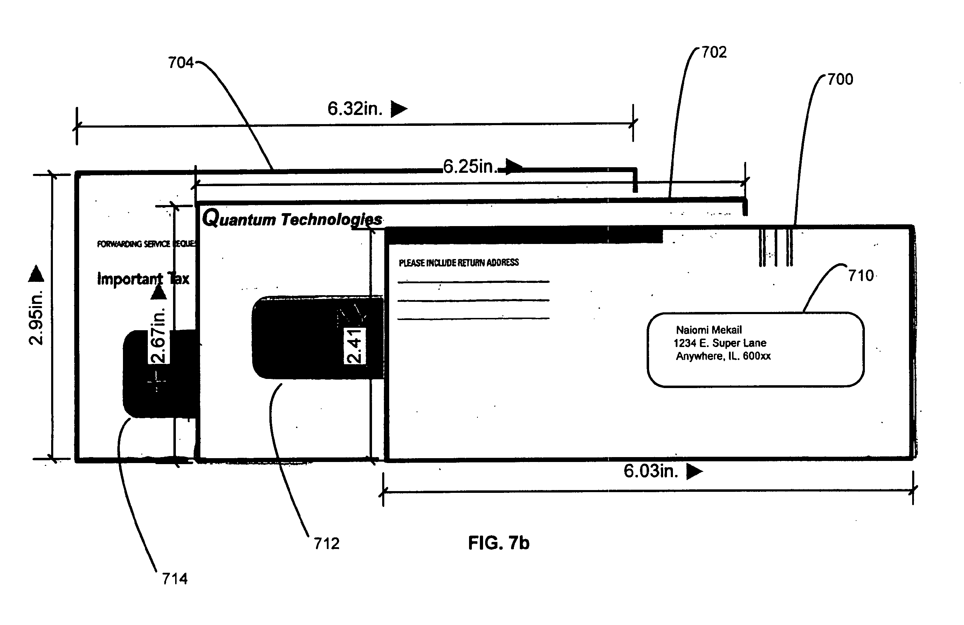

Attention is now directed to FIGS. 7a and 7b, which depict a plurality of envelopes of various sizes and design configurations that are capable of being utilized in the formation of mailings. The first envelope 700 is the smallest, and has a length of 6.03 inches and height of 2.41 inches. Unlike the other two envelopes, the first envelope 700 also has an address block window 710 that is positioned towards the rightmost edge of the letter. A second envelope 702 is only slightly larger than the first envelope, with dimensions of 6.25 inches in length and 2.67 inches in width. A third envelope 704 is larger than both the first and second, with a length of 6.32 inches and width of 2.95 inches. As depicted, both the second envelope 702 and third envelope 704 have display windows 712 and 714 respectively, which are oriented towards their leftmost edges.

Obviously, the three envelopes depicted herein are but a few examples of a myriad of envelope sizes, styles and types that may be employed for the generation of mailings. In general, documents are composed during the document composition phase 101 or printstream processing phase 102 such that they may be suitably positioned within an envelope of a given size, usually upon the document being folded or cut accordingly during inserter processing. Hence, when a job is placed within queue for inserter processing and the job requirement data is received (e.g., inserter control file), the envelopes to be used are also specified; and the specified envelopes (if available) are loaded into the envelope feeder of the appropriate inserter device. As no two jobs need necessarily be alike, likewise different jobs may require envelopes of differing sizes or types. Consequently, the operator of the inserter must adjust and configure the envelope feeder-i.e., adjust the document folder position, adjust document feeder track length, adjust vision system positioning based on different address block window locations-each time a different envelope is employed.

However, in accord with the present teachings, standardization analysis 602 may be performed to explore opportunities for standardization of tasks, events, procedures, processes, resources on the basis of information relevant to the mail processing lifecycle. For example, historical data 420 FIG. 4 relative to the multitude of jobs performed over a period of time by the mail processing facility 250 may be recalled by the data engine 280 from the database 288. Alternatively, the recalled historical data 420 may be limited to a single mailer whose jobs are processed consistently by the mail processing facility 250. Let's assume that standardization analysis of the historical data 420 revealed that of all the jobs produced at the mail processing facility 250 by a single mailer, or even a plurality of different mailers, that three jobs 620-624 required the usage of only the three differing envelope sizes 700-704 as shown in FIGS. 7a and 7b. If instead only a single envelope type/size could be utilized each time with respect to all future jobs by the same mailer or mailers, the amount of time and energy required to adjust and configure the envelope feeder for accommodating different envelope sizes is reduced. Even if the preprinted material on the envelope is different, if the size is the same the inserter adjustments are eliminated and the envelopes for the next job are loaded into the envelope feeder and the inserter is ready to run. If the window location 710-714 can not be adjusted, the vision system for reading the address block data, if required, would have to be repositioned.

With this in mind, further analysis could be performed with respect to the three different envelopes 700-704, such as to reveal which of the three may be best suited to become the standard envelope to be used during the mail processing phase 104 at least with respect to the mailer or mailers, for the jobs 1-3. The standardization analysis may be carried out by the data engine 280. Considerations taken into account during the analysis may include the relative size of the envelopes 700-704, their respective address block window locations 710-714, the cost differential between the envelopes and the quantity processed by jobs 620-624. Additional data associated with each job may be part of the analysis as required. The standardization analysis may provide a display of the envelopes 604 associated with the three jobs that were selected as standardization candidates. For this example, job 2 622 is recommended as the standardization target for jobs 1-3, based on the quantity processed and the fact that the envelope 702 would require the minimal adjustment in paper size and accompanying change in print layout.

For example, the data engine 280 using a display format 604, may highlight job 2 for the operator's evaluation. If the operator selects the recommended standardization target job 606 then an analysis of printstreams 610 is performed to determine if the address block can be relocated and the document content can be reformatted to fit the paper size associated with envelope 702 for job 2. Step 610 only performs a cursory analysis of several pages associated with job 1 and job 3. Processes such as but not limited to white space analysis, graphics location, fixed format requirements versus floating content and address block constraints are taken into consideration. The cursory analysis 610 establishes feasibility of the required reformatting and produces sufficient data for the operator to confer with the clients responsible for jobs 1 and 3. Client approval is normally required since the appearance of any documents destined for a customer is of critical importance. Various levels of automation may be employed to facilitate the decision process 612.

If the operator and client do not approve any of the standardization options 614 then no further action is performed until the standardization analysis algorithm 602 identifies other candidate jobs for standardization. If one or more of the candidate jobs are approved then the associated printstreams for jobs 1 and/or 3 can be reformatted using the ReCompose software process 616. The ReCompose software will automate the reformatting of all document pages for the selected jobs. This automated process will format all future documents suitably for placement within the second envelope 702. As such, the content intended for display via the envelope address block window 712, such as the recipient address block information, key line data, or barcode data, must also be properly positioned during the document composition phase 101 or the printstream processing phase 102. The need to do so is best seen in comparison between the design of the first envelope 700 and the second 702, wherein the former has address block window 710 placed almost completely contradictory to the placement of the display window 712 on the envelope 702. Hence, document composition or printstream processing standards or defaults may be recommended, and subsequently adopted and applied during the document composition phase 101 and the printstream processing phase 102 accordingly for mailings/documents to be directed to the mail processing facility 250 (e.g., a preferred letter shop). As an example, a corrective or predictive action may include an instruction to manipulate the printstream representation of the document upon its placement into the queue/print spooler for processing. If relocation of the address block data is not feasible, standardization can still be achieved by increasing the size of the envelope 700 for job 1 to match the size of the envelope 702 for job 2 while holding the position of the address block window 710 in the same relative position. The standardization would still achieve the savings associated with setup time and paper size.

The production management 202 would schedule the automatic running of ReCompose prior to printing jobs 1 and 3 next time the jobs are scheduled to run 618. Scheduling also would ensure that jobs 1, 2, and 3 run sequentially to save on set up time, and production management would notify the enterprise resource server 154 what changes in material such as paper and envelopes are required to complete the standardized jobs. Although the standardization process is generally assumed to be based on historical data, nothing precludes using advanced knowledge for future jobs as communicated from the document composition 101 or printstream processing 102 phases to the data engine 280. If sufficient lead time is available, the printstreams can be reformatted and material ordered in advance of the scheduled production date of the mail processing 104.

Additional examples of standardization based on the determination and selection of a standard envelope size include, but are not limited to, standard document folder position, standard document feeder track length, standard vision system positioning with respect to the address block window 712, standard envelope order fulfillment process, etc. The presentation of the recommendation to carry out the standards may include or be accompanied with data representative of the results and assumptions that led to the recommendation (e.g., results of the envelope analysis), as well as explanation of the benefits and/or advantages associated with such standardization. Benefits to be communicated may include: cost advantages/benefits, man hour reductions, letter size and type cost reductions, bulk inventory discounts, order fulfillment advantages; time advantages/benefits: reduced envelope feeder setup time, reduced order fulfillment processing (e.g., better enable just-in-time order fulfillment), improved job scheduling and resource management (e.g., employ a single operator to fulfill the mailing while other operators are assigned to jobs that require variable setups), overall per mailing throughput and efficiency increases. The end result, as shown by this example, is that even the smallest incremental standardization of a process, device, activity, resource, material-in this case an envelope standardization-can have significant impact upon the mail processing effort.

Of course, practitioners of the art will recognize that the teachings presented with respect to FIGS. 6, 7a and 7b represent only one example of standardization; particularly, wherein the standardization is based upon a certain material and its usage. Indeed, various other examples of standardization may be employed to affect the mail processing lifecycle, including but not limited to: standardized machine usage, standardized operator usage, standardized paper type and usage, standardized print formats (e.g., roll, cut sheet, fan fold), standardized printer settings usage, standardized mail processing facility device location placement (e.g., assign jobs only to inserters located closest to a shrink wrapping machine), standardized postage application, standardized maintenance scheduling, standardized report generation, standardized machine control settings (e.g., inserter control file, sort scheme), etc. In each of these examples, the data engine 280 must first perform analysis, just as in the case of the envelope standardization example above, to determine the extent to which such standardization is feasible and advantageous to the mail processing effort.

An additional benefit of standardization is the opportunity to combine multiple jobs into a single mailing in order to achieve significant savings in postage. Banks, insurance companies and other large mailers may have several different jobs to run, which after standardization of envelopes and paper size is complete, can be merged into a single printstream and run on a inserter as a single job. If these jobs, as represented by print files 128, 130 and 132 in FIG. 1 are submitted to printstream processing 102 tool such as ReCompose, the presort software feature can be used to sort the documents represented by the print files into a single print file where the documents are grouped according to like delivery point groups. Postal authorities and private posts offer postage discounts if the mail is delivered to them presorted into like groupings of similar delivery points. In the case of the USPS the groupings are based on the Zipcodes such as 5 digit, 3 digit and AADC groupings. The additional postage saving is realized by combining the jobs since more of the mail can be presorted into 5 digit groupings. This means that when the minimum piece count for a 5 digit destination group exceeds the minimum number of mailpieces, the maximum postage discount is achieved. The same applies to other groupings such as 3 digit and AADC. It is clear to those skilled in the art that the more pieces available for presorting the more mail is going to qualify for the highest postage discount offered. The data engine 280 working in conjunction with the analysis module 220 and printstream processing 102 will produce the postage savings using a combination of operator approval of the changed business model and automated software processes to prepare the correct print file for the combined jobs. Additional postage savings opportunities can be configured by those skilled in the art which include but are not limited to new discounts on the cost of an additional ounce and incentives to use different formats such as letters versus flats.

It should be noted that the activities and/or processing tools employed during the document composition 101 and printstream processing 102 phases can be located in any satisfactory physical location. In addition, components of the mail processing phase 104 need not be physically co-located for the intelligent document processing techniques presented herein to be effective. Those skilled in the art will recognize that communication technology and digital interfaces can be configured to enable the data engine 280 to access all of the necessary components of the system 100 regardless of the physical layout.

Attention is now turned to FIG. 8, which depicts an exemplary process flow diagram for correction of a job processing issue resulting from equipment not being available for operation. This example also references the functions of the data engine 280 as shown in FIG. 2. The customer service management function 208 of the data engine 280 continuously monitors the status of all elements of mail processing, including but not limited to processing equipment such as printers, inserters and sorters, plus resource availability such as operators or consumable resources like paper, ink and envelopes. In the example, assume that the dual dependent input channel inserter is reported as unavailable for production 800. For this example, production job 5 is scheduled via production management 202 for printing and processing on a dual dependent input channel inserter. Job 5 requires that the first page of every document be printed on 8.5 by 14" paper where the bottom 3 inches is reserved for a tear off payment voucher. The balance of the document pages are printed on 8.5 by 11" pages. Therefore, channel one of the dual dependent input channel inserter is reserved for page one and the balance of the pages are reserved for channel 2. The two channels are synchronized so that page one is always mated with the correct additional pages from channel two. Since production management 202 has been alerted of the equipment failure and the pending requirement to run job 5, the data engine analysis module 220 is alerted that job 5 can not be run 802. The analysis module 220, in conjunction with the production management module 202 for scheduling information and the customer service management module 208 for equipment options, determines that an alternative inserter is available for processing if all pages are configured for 8.5 by 11" pages 804. This option is reported to an operator for approval 806 since the form factor of the mailing will be changed and most clients would require approval of the change. If the production timing of job 5 is not critical or the client does not approve, the reconfiguration may be disallowed, and job 5 will be delayed until the dual dependent input channel inserter is repaired and available 808.

The reconfiguration will require that the tear off payment voucher be moved to its own 8.5 by 11" second page of the document and the balance of page one remain on an 8.5 by 11" first page. If the reconfiguration is approved, there are at least two options available. One option is fully automatic and the other has more operator intervention. The operator intervention reconfiguration 810 is accomplished with either the document composition management function 210 in conjunction with composition tools 101 or with the printstream processing management function 212 in conjunction with re-composition tools 102. Using the appropriate tools the operator, following the instructions for the analysis module and associated management function, locates the data associated with the coupon and reallocates the coupon to its own 8.5 by 11" second page and formats the balance of page one onto the first page which is now 8.5 by 11" in size. Once the changes are defined the document composition phase 101 or the re-composition in the printstream processing phase 102 will process the balance of the documents in job 5 to the new format.

This type of reconfiguration may be a frequent occurrence for numerous different jobs, which all use the bottom section of page one for a unique purpose. The analysis module 220 in conjunction with the printstream processing management function 212 therefore may be programmed using the script control for a ReCompose in the printstream processing phase 102 to locate the beginning of the bottom section of page one and insert a page feed command to move this material to a separate 8.5 by 11" page two. The algorithm for this automatic processing 812 need be no more than a key word search for the occurrence of the first word which starts the bottom section of the original page one. Of course those skilled in the art may add additional search criteria if the first word in not unique within page one. This makes the operator actions very simple since only the key word for the job in question need be identified in order to have ReCompose reformat the entire job 5. Once the job is reformatted and the updated printstream is available, the job is printed and run on the available inserter 814.

Those skilled in the art will recognize that this example is only one of many possible scenarios where a status change in mail processor availability, mail processor configuration change, the addition of new mail processors and consumable material availability may impact the ability to run production jobs in a mail processing phase 104. Many of these production jobs can be run if the format of the printed material is changed to match the mail processors that are available to run the job. The ongoing surveillance of the phases 101, 104 and 104 associated with the mail production by the data engine 280 utilizing its management functions 202 thru 212 enables the analysis module 220 to have available all the necessary data, associated with future production jobs, current production requirements and historical data, to initiate corrective action to the printstreams associated with jobs that will enhance production efficiency or prevent the cancellation of a production job.

As presented herein the teachings enable on-demand response to conditions/statuses/events/occurrences/etc. as is generally beneficial to any multi-phase, interdependent environment such as a mail processing facility integrated with a document creation capability and/or integrated with a printstream processing capability. This adaptability and on-demand response capability leads to benefits including but not limited to, the following:
❖ Ability to alter document composition in response to standardization opportunity
❖ Ability to alter document composition in response to mail factory configuration change
❖ Ability to alter document composition in response to changes in factory status

In the illustrated examples, servers such as 603 are intended to represent a general class of data processing device commonly used to run "server" programming. Such a device typically utilizes general purpose computer hardware to perform its respective server processing and to control the attendant communications via the network(s). Each such server, for example, includes a data communication interface for packet or other data communication with other system processors. The server also includes a central processing unit (CPU), in the form of one or more processors, for executing program instructions. The server platform typically includes program storage and data storage for various data files to be processed and/or communicated by the server, although the server often receives programming and data via network communications. The data engine software, for example, could run on top of a server operating system on a server computer 603. The hardware elements, operating systems and programming languages of such servers are conventional in nature, and it is presumed that those skilled in the art are adequately familiar therewith.

In the illustrated examples, user terminal devices are generally illustrated as personal computers (PCs) or the like. Such devices are intended to represent a general class of data processing device commonly used to run client software and various end-user applications. The hardware of such personal computer platforms typically is general purpose in nature, albeit with an appropriate network connection for communication via the intranet, the Internet and/or other data networks. As known in the data processing and communications arts, each such general-purpose personal computer typically comprises a central processor, an internal communication bus, various types of memory (RAM, ROM, EEPROM, cache memory, etc.), disk drives or other code and data storage systems, and one or more network interface cards or ports for communication purposes. Of course, a personal computer or other end user data device will also have or be coupled to a display and one or more user input devices such as alphanumeric and other keys of a keyboard, a mouse, a trackball, etc. The display and user input element(s) together form a user interface, for interactive control of the computer and through the computer to control other mail processing operations. These user interface elements may be locally coupled to the computer, for example in a workstation configuration, or the user interface elements may be remote from the computer and communicate therewith via a network. The hardware elements, operating systems and programming languages of such end user data devices are conventional in nature, and it is presumed that those skilled in the art are adequately familiar therewith.

Data processing devices, similar to servers or PCs also serve as or control various equipment in the mail processing facility 250.

Aspects of the methods outlined above may be embodied in software, e.g. in the form of program code executable by the server 603 or other programmable device implementing the data engine 280. Such software typically is carried on or otherwise embodied in a medium or media. Terms such as "machine-readable medium" and "computer-readable medium" as used herein generically refer to any medium that participates in providing instructions and/or data to a programmable processor, such as the CPU of a server or end user data device or in any of the computers controlling various mail processing equipment, for execution or other processing. Such a medium may take many forms, including but not limited to, non-volatile storage media, volatile storage media, and transmission media. Non-volatile storage media include, for example, optical or magnetic disks. Volatile storage media include dynamic memory, such as main memory or cache. Physical transmission media include coaxial cables; copper wire and fiber optics, including wired and wireless links of a network and the wires that comprise a bus within a computer or the like. Transmission media, however, can also take the form of electric or electromagnetic signals, or acoustic or light waves such as those generated during optical, radio frequency (RF) and infrared (IR) data communications. Hence, common forms of machine-readable media include, for example, a floppy disk, a flexible disk, a hard disk, a magnetic tape, any other magnetic medium, a CD or CDROM, a DVD or DVD-ROM, any other optical medium, punch cards, paper tape, any other physical medium with patterns of holes, a RAM, a PROM, an EPROM, a FLASH-EPROM, a cache memory, any other memory chip or cartridge, a carrier wave transporting data or instructions, physical links bearing such a carrier wave, or any other medium from which a computer or the like can read in order to read or recover carried information.

Various forms of machine-readable media may be involved in carrying one or more sequences of one or more instructions to a processor for execution. For example, all or portions of the software of the data engine 280 of FIG. 2 to perform the functions of the processes of FIGS. 3-8 may at times be communicated through the Internet, an Intranet, a wireless data communication network, or various other telecommunication networks. Such communications, for example may serve to load the software from another computer (not shown) into the server 603 or other platform(s) that serve as the data engine 280.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A method for influencing operations of hard copy document processing equipment, comprising steps of:
collecting real-time information associated with the operations of the document processing equipment;
receiving printstream information regarding a printstream useable for generation of printed mail articles for processing by the document processing equipment;
analyzing the collected information associated with the operations of the document processing equipment and the received printstream information to analyze operations of the document processing equipment relative to hard copy documents generated from the printstream; and
based on the analysis, identifying a printstream modification to improve performance of the document processing equipment.

2. The method of claim 1, further comprising generating a recommendation of the identified printstream modification.

3. The method of claim 1, further comprising instructing a processor to automatically implement the identified printstream modification in real-time.

4. The method of one of claims 1 to 3, wherein the printstream information comprises an
electronic composition of a plurality of documents intended for printing and processing as mail articles by the document processing equipment.

5. The method of one of claims 1 to 4, wherein
the step of collecting comprises collecting information associated with the operations of the document processing equipment during processing a plurality of jobs, each job comprising a plurality of mail articles;
printstream information is obtained for the plurality of jobs;
the collected information is analyzed for the plurality of jobs to identify an opportunity for standardization of one or more operations of the processing equipment; and
based on the analysis, one or more parameters is specified for future jobs to take advantage of the identified standardization opportunity.

6. The method of claim 5, further comprising generating mail articles for a plurality of future jobs conforming to the one or more specified parameters.

7. The method of claim 5 or 6, wherein the identified standardization opportunity includes insertion of additional content to the printstream information.

8. The method of one of claims 1 to 7, wherein the improvement to document processing by the one or more document processors results in a postage discount.

9. A computer programmed to implement the steps of the method of one of claims 1 to 8.

10. A product comprising a machine readable medium and an executable program embodied in the medium for causing a computer to implement the steps of the method of one of claims 1 to 8.

11. A system, comprising:
a plurality of document processors configured for processing hard copies of documents as mail articles; and
a data engine in communication with one or more of the document processors, for:
collecting real-time information associated with the operations of the plurality of document processors;
receiving printstream information regarding a printstream useable for generation of printed mail articles for processing by the plurality of document processors;
analyzing the collected information associated with the operations of the plurality of document processors and the received printstream information to analyze operations of the plurality of document processors relative to hard copy documents generated from the printstream; and
based on the analysis, identifying a printstream modification to improve performance of plurality of document processors.

12. The system of claim 11, wherein the data engine is configured for identifying the printstream modification in response to detecting a configuration change of one or more of the mail processors or in response to detecting a change in status of one or more of the document processors.

13. The system of claim 11 or 12, wherein the data engine is further configured for providing a recommendation of the identified action to an operator of the electronic document processor, as the output.

14. The system of claim 11 or 12, wherein the data engine is further configured for automatically providing an instruction to the electronic document processor to implement the identified action, as the output.

15. The system of one of claims 11 to 14, wherein the data engine is configured for analyzing the aggregated data related to a plurality of different jobs comprising a plurality of documents and for determining a modification of one or more document parameters to standardize the documents of future jobs.

16. The system of one of claims 11 to 15, wherein the improvement to document processing by the one or more document processors results in a postage discount.
